# EUROPEAN PATENT APPLICATION

(11) **EP 3 461 016 A1**
(43) Date of publication of application: **27.03.2019**
(21) Application number: 16912042.5
(22) Date of filing: 09.08.2016
(51) Int. Cl.: H04B 5/00

(54) **SYSTEM ON CHIP AND PROCESSING DEVICE**

(71) Applicant: Huawei Technologies Co., Ltd., Longgang District Shenzhen, Guangdong 518129 (CN)
(72) Inventor: TAN, Zhufeng, Shenzhen Guangdong 518129 (CN); LU, Jiayin, Shenzhen Guangdong 518129 (CN); LIU, Yu, Shenzhen Guangdong 518129 (CN); SUN, Shaojie, Shenzhen Guangdong 518129 (CN)
(74) Representative: Kreuz, Georg Maria
(86) International application number: PCT/CN2016/094226
(87) International publication number: WO 2018/027587

(57) **Abstract**

A system on chip is integrated on a first semiconductor chip, and includes: a system bus, at least one processor coupled to the system bus, and a security processor system coupled to the system bus. The security processor system includes a security processor, a first memory, multiple interfaces, and a security bus, where the security processor, the first memory, and the multiple interfaces are coupled to the security bus, and the security bus is coupled to the system bus. The security processor is configured to execute security operating system software and at least one security software application based on the security operating system software, where the at least one security software application includes mobile payment software used to implement mobile payment. The multiple interfaces include a near field communication (NFC) interface and a biometric recognition input interface.

## Description

### TECHNICAL FIELD

The present invention relates to the field of chip technologies, and in particular, to a system on chip (System of Chip) and a processing device.

### BACKGROUND

Mobile payment (Mobile Payment) is a service manner of allowing a user to pay for consumed goods or services by using a mobile terminal, for example, a mobile phone, a tablet computer, or a wearable device. At present, there are three manners of implementing mobile payment by using a mobile terminal. The three manners are respectively a secure digital (Secure Digital, SD) card solution, a subscriber identity module (Subscriber Identity Module, SIM) solution, and an all-terminal solution combining Near Field Communication (Near Field Communication, NFC) and a secure element (Secure Element, SE). Currently, the all-terminal solution combining Near Field Communication and a secure element is becoming a mainstream solution of implementing mobile payment. In addition, these several solutions present a tendency of being combined. For example, the secure element may also have a SIM function or another function.

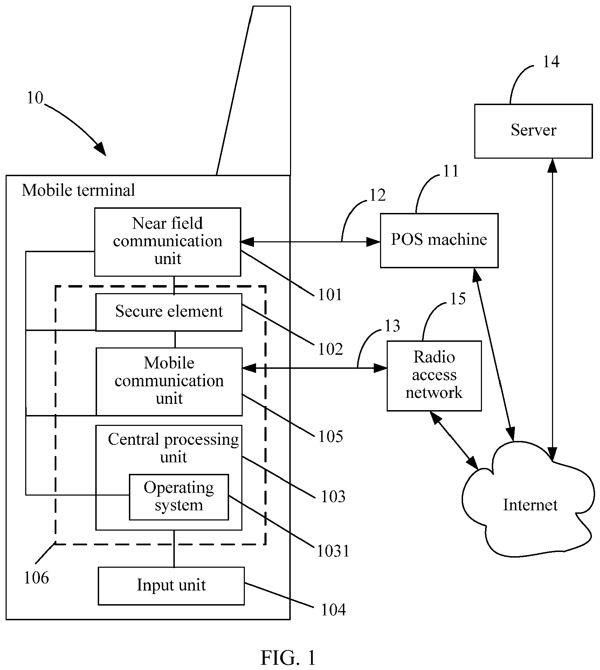

An existing all-terminal solution is shown in FIG. 1. A mobile terminal 10 communicates with a point of sale (Point of sales, POS) machine 11 by using a near field communication unit 101 in the mobile terminal 10. A near field communication link 12 between the near field communication unit 101 and the POS machine 11 is a bidirectional path, and may be implemented by using various suitable short-range wireless communications protocols, so as to implement a basic wireless communications function in mobile payment. For example, the communication link 12 may be configured to transmit POS instruction data from the POS machine 11 to the near field communication unit 101 in the mobile terminal 10. A secure element 102 may be a component coupled to an independent central processing unit (Central Processing Unit, CPU) 103, and is configured to: execute various functions related to a financial payment service, and store data related to a banking service, such as a key or a certificate. In a transaction, the secure element 102 receives POS instruction data from the near field communication unit 101, parses the instruction data, and makes a corresponding response according to a financial transaction protocol. The response is fed back by the near field communication unit 101 to the POS machine 11, to complete data transmission in mobile payment, so that the mobile terminal 10 can function as a transaction verification card. The central processing unit 103 executes general-purpose operating system software 1031, for example, Android (Android) system software, and the general-purpose operating system software 1031 is used to control the near field communication unit 101 and the secure element 102, for example, control turning-on or turning-off of the near field communication unit 101 and the secure element 102. In addition, the mobile terminal 10 may include an input unit 104. The input unit 104 may be a touchscreen, and may be considered as a user interface (User Interface, UI) to exchange a message with a user, so that the user can input an operation instruction on the input unit 104 driven by user interface software, to instruct the operating system software 1031 and related software application to perform related operations which may include transaction confirmation, personal transaction password input, or the like. The POS machine 11, as a terminal device for performing a transaction, is connected to a cloud server 14 on a network side through the Internet, so that a payment service is computed and completed by using the server 14. The server 14 on the network side is usually operated by a bank or an Internet company.

The all-terminal solution may include online payment and offline payment. During offline payment, as shown in FIG. 1, the mobile terminal 10 performs contactless card swiping with the POS machine 11, that is, swiping the mobile phone. The near field communication unit 101 and the secure element 102 cooperate to complete a payment transaction. Online payment may be implemented without using the near field communication unit 101. In this case, the central processing unit 103 and the secure element 102 may be connected to the Internet through a mobile communications network, to implement the online payment. In this case, the secure element 102 has a function equivalent to that of a bank USB key, and is configured to store and verify a bank certificate. Therefore, the near field communication unit 101 in FIG. 1 is optional. Specifically, referring to FIG. 1, during online payment, the mobile terminal 10 may further include a mobile communication unit 105, configured to play a role of the near field communication unit 101 during offline payment. The mobile communication unit 105 is connected to a radio access network (Radio Access Network, RAN) 15. The radio access network 15 may specifically include a wireless access point, for example, a base station. The mobile communication unit 105 is connected to the Internet through the radio access network 15, and the Internet is connected to the server 14 that is located in the Internet, so as to receive instruction data or transmit information to the secure element 102 based on the server 14. The secure element 102 parses the instruction data and makes a corresponding response according to a financial transaction protocol, so that the mobile communications unit 105 transmits the data to the server 14 on the network side through the mobile Internet. In this case, the mobile communication unit 105 may be a unit executing a wireless cellular communications protocol, and is configured to connect the mobile terminal 10 to the Internet through a cellular radio communication link 13. The mobile communication unit 105 is a cellular communication processor, and may specifically support a cellular wireless communications protocol such as Global System for Mobile Communications (Global System for Mobile, GSM), Universal Mobile Telecommunications System (Universal Mobile Telecommunications System, UMTS), Worldwide Interoperability for Microwave Access (Worldwide Interoperability for Microwave Access, WiMAX), Time Division-Synchronous Code Division Multiple Access (Time Division-Synchronous Code Division Multiple Access, TDS-CDMA), Code Division Multiple Access 2000 (Code Division Multiple Access 2000, CDMA2000), Long Term Evolution (Long Term Evolution, LTE), or 5G (5th Generation), to assist in implementing a mobile Internet function of the mobile terminal 10.

The Chinese Patent Application No. 201510201343.9 provides a solution of integrating the secure element 102 and the central processing unit 103 (or optionally including a mobile communication unit 105) on a same semiconductor substrate, that is, integrating the secure element 102 and the central processing unit 103 on a main chip 106. In addition, the secure element 102 may load, from a storage unit outside the main chip 106, general-purpose operating system software required by the central processing unit 103, such as Android or Windows operating system software. A system formed by integrating multiple components on one semiconductor substrate or semiconductor chip may be referred to as an SoC. Obviously, integrating the secure element 102 and the central processing unit 103 on the SoC may have many advantages. For example, costs are greatly reduced, and layout space of the SoC on a PCB (printed circuit board) is reduced, so that the secure element 102 and the central processing unit 103 can be based on a same advanced integrated circuit manufacturing technology. Improvement of the technology means enhancement of security.

With development of a mobile application scenario, there are more types of software application executed by the secure element 102, and an application scenario of the secure element 102 is no longer limited to mobile payment, and may further include some software related to SIM cards, for example, software application customized by a communications operator. Therefore, complexity of an SoC implemented in an integrated manner becomes higher, and how to implement an SoC having high integration and complex functions and fully meeting a security requirement has become a problem. For example, in the Chinese Patent No. 201510201343.9, a central processing unit may form a trustzone (Trustzone, TZ) outside an environment of a general-purpose operating system. The TZ is a trusted execution environment (Trust Execute Environment, TEE). A user may enter some information related to a security application such as mobile payment in the TEE, and application operations of different security levels are implemented in the TEE and the environment of the general-purpose operating system respectively. Because the TEE is an environment generated by the central processing unit, security of the TEE still needs to be improved. For example, the secure element 102 may exchange some particular information with a peripheral device through the existing TEE. For example, the secure element 102 exchanges fingerprint data with a fingerprint sensor through the TEE. Because related information may be transmitted through the TEE, security of the information exchange may be reduced. Therefore, how to implement a mobile payment service based on NFC communication on an SoC on the premise of ensuring security becomes a problem that needs to be resolved urgently.

### SUMMARY

Embodiments of the present invention provide an SoC and a processing device, so as to improve security of a mobile payment service based on NFC communication in a highly-integrated SoC.

According to a first aspect, an embodiment of the present invention provides an SoC, where the SoC is integrated on a first semiconductor chip, and includes: a system bus, at least one processor coupled to the system bus, and a security processor system coupled to the system bus, where security isolation exists between the security processor system and the at least one processor; the at least one processor includes at least one central processing unit, where the at least one central processing unit is configured to: execute general-purpose operating system software, and communicate with the security processor system through the system bus under the action of the general-purpose operating system software; and the security processor system includes a security processor, a first memory, multiple interfaces, and a security bus, where the security processor, the first memory, and the multiple interfaces are coupled to the security bus, and the security bus is coupled to the system bus, where the security processor is configured to execute security operating system software and at least one security software application based on the security operating system software, where the at least one security software application includes mobile payment software used to implement mobile payment; the first memory is configured to provide storage space used by the security processor to execute the security operating system software and the at least one security software application; and the multiple interfaces include a near field communication NFC interface and a biometric recognition input interface, where the NFC interface is configured to exchange NFC information related to the mobile payment with an NFC peer through an NFC processor; and the biometric recognition input interface is configured to receive biometric recognition data from a biometric recognition sensor, where the biometric recognition data is used for user authentication based on biometric recognition in the mobile payment. Optionally, the NFC information includes at least one of a mobile payment instruction, mobile payment data, or NFC authentication information. Further, under the security isolation, the at least one processor cannot directly access the first memory or at least one register in the security processor system. For example, the at least one processor may be coupled to the security processor system through a dedicated interaction channel.

The foregoing SoC integrates functions of a processor and a security processor system, so that implementation costs and an area of the entire system can be reduced. In addition, a function equivalent to that of a secure element is implemented in the security processor system, and at least one security software application including mobile payment software can be executed. In addition, a biometric recognition input interface belonging to the security processor system is integrated in the security processor system, so that biometric recognition data can be conveniently obtained. Besides, security isolation exists between the security processor system and the at least one processor. When a mobile payment service based on NFC communication is performed, this solution has higher security, compared with a solution of transferring biometric recognition data of a user to the security processor system through a TEE of a central processing unit.

According to the description of the first aspect, in a possible implementation, communication between the at least one central processing unit and the security processor system includes exchange of data or exchange of an instruction. The instruction may be an instruction for controlling or operating the security processor system by the at least one central processing unit, and includes but is not limited to a startup instruction, a disable instruction, a restart instruction, a sleep instruction, an instruction for entering or exiting a low power consumption state, or an operation suspension or recovery instruction. By means of the foregoing exchange process, an operating state of the security processor system may be controlled by the at least one central processing unit, but security of data in the security processor system is not affected.

According to the description of the first aspect, in a possible implementation, the security processor system may be configured to implement a function of a secure element or a SIM function. The security processor equivalently implements the function of the secure element, and may further integrate another function. Therefore, the at least one security software application may include other security software applications, such as SIM software. By implementing functions of the software in the security processor system, a security application scenario of the SoC may be expanded.

According to the description of the first aspect, in a possible implementation, the first memory may be a volatile memory, for example, a random access memory (RAM). The first memory may be configured to store the security operating system software and the at least one security software application that are loaded, and may be further configured to store secure temporary data generated when the security operating system software and the at least one security software application are executed. The secure temporary data is intermediate data, an intermediate operation result, or other information that is related to the security software application or executing of the security software application and that does not need to be stored for a long time, where the secure temporary data is generated when the security processor executes the security operating system software and the at least one security software application. Therefore, the RAM is a volatile storage device, for example, an SRAM (static random access memory), a DRAM (dynamic random access memory), or an SDRAM (synchronous dynamic random access memory), and preferably, is an SRAM. The RAM is integrated in the SoC. Therefore, the RAM may use a manufacturing technology the same as that of the at least one central processing unit, and the technology is relatively easy to implement.

According to the description of the first aspect, in a possible implementation, the multiple interfaces further include a security input interface, configured to receive user information related to the mobile payment that is input by a user. Optionally, the user information includes a password, a user instruction, or a financial transaction amount. Optionally, the security input interface is coupled to an input device, to receive the user information by using the input device. For example, the input device may be a touchscreen or a key. In this implementation, because an interface of the user information is also integrated in the security processor system, acquiring of the user information does not rely on a TEE of the central processing unit anymore, and higher security can be implemented.

According to the description of the first aspect, in a possible implementation, the multiple interfaces further include a peripheral interface, configured to indicate, by using a peripheral device, to the user that the mobile payment is performed. For example, the peripheral device is an indication device, and the peripheral interface is coupled to the indication device. The indication device may be an indicator, a loudspeaker configured to play a sound, or a vibrator, and is configured to prompt the user that the mobile payment is being performed, has been performed, or is to be performed. In this implementation, because the peripheral interface is also integrated in the security processor system, transmission of indication information does not need to rely on the TEE of the central processing unit anymore either, and higher security can be implemented.

According to the description of the first aspect, in a possible implementation, the security processor system further includes a nonvolatile second memory that is coupled to the security bus and that is configured to store the security operating system software and the at least one security software application; and the security processor is configured to: read the security operating system software and the at least one security software application from the second memory, and load the security operating system software and the at least one security software application to the first memory to execute the security operating system software and the at least one security software application. Because the second memory is also integrated in the SoC, all software executed by the security processor is stored in the second memory for a long time, and there is no need to rely on a memory outside the SoC to store the security operating system software and the at least one security software application, so that the security is high.

According to the description of the first aspect, in a possible implementation, under the security isolation, the security processor system further includes a security isolation device that is coupled to the security bus and that is configured to implement the security isolation. The at least one processor communicates with the security processor system through the system bus and the security isolation device. Further, the security isolation device includes at least one of an isolation memory or a bus bridge; and the isolation memory or the bus bridge is configured to exchange data or instruction between the at least one processor and the security processor system. For example, the at least one central processing unit may be coupled to the security processor system through the system bus and the isolation memory or the bus bridge under the action of the general-purpose operating system software, to communicate with the security processor system. Content of the communication includes data or an instruction. The bus bridge may be a bus bridging between the security bus and the system bus. Further, under the security isolation, the at least one processor cannot directly access any component in the security processor system except the isolation memory or the bus bridge. The at least one processor and the security processor system only use either the isolation memory or the bus bridge as a dedicated interaction channel, or even a unique interaction channel. Therefore, the at least one processor is prevented from directly accessing the first memory or any component or module in the security processor system, so that the security can be improved.

According to the description of the first aspect, in a possible implementation, the security processor system further includes a secure boot memory that is coupled to the security bus and that is configured to store a boot program instruction for initialization of the security processor; and before executing the security operating system software and the at least one security software application, the security processor obtains the boot program instruction from the secure boot memory to initialize the security processor. The secure boot memory is a nonvolatile memory, for example, a ROM. Similar to a BIOS (basic input/output system) in a conventional PC (personal computer), the secure boot memory ensures that an initial startup of the security processor system starts form the secure boot memory each time, to ensure startup security. For example, when the security processor system is powered on, the security processor is configured to: read the boot program instruction from the secure boot memory, and load the security operating system software to the first memory under the action of the boot program instruction, to execute the security operating system software.

In the foregoing implementation, optionally, the boot program instruction is an encrypted boot program instruction; and when the security processor obtains the boot program instruction from the secure boot memory, the boot program instruction is decrypted by a decryption logic circuit to obtain a decrypted boot program instruction, where the decrypted boot program instruction is used to initialize the security processor. This solution can further ensure the startup security.

According to the description of the first aspect, in a possible implementation, the security processor system further includes a one-time programmable (OTP, One Time Programable) memory that is coupled to the security bus and that is configured to store a security parameter of the security processor system, where the security parameter includes at least one of a root key, a calibration parameter, a configuration parameter, or an enable parameter. For example, the root key is used to generate another key for encryption and decryption of the security processor system. The calibration parameter includes a parameter for performing calibration on at least one component in the security processor system. The configuration parameter includes a configuration parameter of at least one component in the security processor system. The enable parameter includes a parameter for controlling at least one component in the security processor system to turn on or turn off. The security parameter may be programmed in the OTP memory, to calibrate, configure, or set the security processor system, or close or disable functions of some devices in the security processor system. Therefore, the OTP memory makes some internal functions of the corresponding security processor system still configurable or changeable after the SoC is manufactured. This improves design flexibility after the SoC is manufactured.

In the foregoing implementation, optionally, the OTP memory is further configured to store a patch program instruction of the boot program instruction for the initialization of the security processor. The patch program instruction may be a supplement to the boot program instruction or a replacement of some programs in the boot program instruction. For example, after the SoC is manufactured, if it is found that the boot program instruction has a deficiency, the deficiency of the existing boot program instruction may still be compensated for by programming the patch program instruction in the OTP memory, so that implementation is more flexible.

According to the description of the first aspect, in a possible implementation, the security processor system further includes an anti-attack sensor, configured to: detect an exception of an operating parameter of the security processor system, and trigger at least one of the following operations when the exception occurs: the security processor system performs an alarm, the security processor resets, or the first memory or at least one register in the security processor system is reset or emptied, where the operating parameter includes at least one of a voltage, a current, a clock frequency, a temperature, or a laser intensity. By means of this implementation, the security of the security processor system executing the security software application is further improved.

According to the description of the first aspect, in a possible implementation, the security processor system further includes an anti-attack metal layer, where the anti-attack metal layer is located on one or more topmost layers of the first semiconductor chip, and covers at least one part of the security processor system in a layout; and the anti-attack metal layer is configured to: detect an external physical detection or attack, and generate an electrical signal when the physical detection or attack is detected, where the electrical signal is used to trigger at least one of the following operations: the security processor system performs an alarm, the security processor resets, or the first memory or the at least one register in the security processor system is reset or emptied. In this implementation, an anti-attack metal layer technology is effectively applied to the SoC, so that the security of the security processor system executing the security software application is further improved. Optionally, the anti-attack metal layer is a shielding (Shielding) metal layer.

According to the description of the first aspect, in a possible implementation, the security bus includes at least one of an advanced high-performance bus (AHB) or an advanced peripheral bus (APB). Optionally, different parts, elements, or circuits in the security processor system may be further classified into different security levels. Connection is performed by using bus technologies of different levels, so that rate requirements and security requirements of different components in the security processor system can be satisfied. Optionally, data transmitted on the security bus or a related address may be processed in one or more manners such as encryption, scrambling, or cyclic redundancy check (CRC, Cyclic Redundancy Check), to ensure privacy and integrity of the data on the security bus and the address.

According to the description of the first aspect, in a possible implementation, the security processor system further includes a direct memory access (DMA, Direct Memory Access) controller that is coupled to the security bus and that is configured to: read data from the first memory and output the data to the security bus, or write data to the first memory by using the security bus. Because of the DMA controller, data read or write efficiency is improved.

According to the description of the first aspect, in a possible implementation, the security processor system further includes a cipher (Cipher) system coupled to the security bus, where the cipher system includes at least one of the following: an encryption and decryption device, configured to perform encryption and decryption processing on at least one type of data in the security processor system; an authentication device, configured to authenticate at least one type of data in the security processor system; a random number generator, configured to generate a random number, where the random number is used as a seed for generating a key or a unique chip identifier; or a key manager, configured to generate, distribute, or destruct, in the security processor system, a key for performing the encryption and decryption processing or the authentication. Optionally, the cipher system is a hardware accelerator that can implement quick and secure operations or processing, and processing security of the cipher system is higher than security of processing performed by a software program executed by the security processor.

Optionally, in the foregoing implementation, the authentication device is configured to perform the user authentication based on the biometric recognition. Alternatively, the user authentication may be performed by the security processor. It can be understood that efficiency of performing the user authentication by using the authentication device is higher, but costs are slightly increased.

In the foregoing implementation, optionally, the at least one processor further includes: a communication processor, configured to send first communication data to a wireless access point or receive second communication data from the wireless access point; and a speech signal processor, configured to: process a speech signal from the user to generate the first communication data sent by the communication processor, or process the second communication data received by the communication processor to obtain a speech signal needed by the user, where the encryption and decryption device is further configured to perform encryption processing on the first communication data or perform decryption processing on the second communication data. In the integrated SoC, the encryption and decryption device in the security processor system originally implementing a function of a secure element is further configured to perform another function, for example, speech signal-based encryption and decryption processing on communication data, so that diversified security processing capabilities are implemented. Optionally, the speech signal may be a PS (packet switched) domain speech signal or a CS (circuit switched) domain speech signal. Optionally, the speech signal processor may include at least one of a HiFi (high-fidelity) processor or a speech codec (Codec). The HiFi processor may be configured to implement processing on the speech signal, such as echo cancellation, smoothing, or timbre enhancement. The speech codec may be configured to implement speech coding and decoding operations, to implement conversion between the speech signal in a digital form and a natural analog speech signal (a common voice signal). Optionally, the wireless access point may be a base station, and the communication processor may be a cellular communication processor.

Alternatively, the at least one processor may further include: a communication processor. The encryption and decryption device is further configured to perform encryption processing on the biometric recognition data to obtain encrypted biometric recognition data; and the communication processor is configured to send, through a wireless access point, the encrypted biometric recognition data to a server configured to perform the user authentication. In this implementation, the biometric recognition data may be uploaded to the server by using the communication processor, and the server implements the user authentication, so that authentication costs of the SoC are reduced. Optionally, the communication processor includes at least one of a cellular communication processor or a short-range communication processor. That is, communication transmission may be implemented in multiple different manners.

Optionally, for the foregoing possible implementations, the cellular communication processor may support at least one of the following cellular wireless communications protocols: GSM, UMTS, WiMAX, TDS-CDMA, CDMA2000, LTE, or 5G. Optionally, the short-range communication processor may support at least one of infrared, Wireless Fidelity (WiFi), Bluetooth, or LTE D2D (Device to Device, device to device).

According to the description of the first aspect, in a possible implementation, the at least one processor further includes at least one of the following: a graphics processing unit (GPU), a system power management unit, or a system peripheral interface. The GPU is configured to process an image signal. The system power management unit is configured to control system power consumption of the SoC, for example, manage and control a clock and a working voltage of the SoC or at least one component in the SoC. There may be multiple system peripheral interfaces that are respectively configured to be coupled to multiple peripheral devices. For example, the peripheral device may be at least one of a USB (Universal Serial Bus) device, a display, a sensor, a camera, a headset, or a loudspeaker.

According to the description of the first aspect, in a possible implementation, the SoC further includes: the NFC processor. Alternatively, the NFC processor may be disposed outside the SoC. When the NFC processor is included in the SoC, manufacturing costs of the entire system can be further reduced.

According to the description of the first aspect, in a possible implementation, the security processor is further configured to perform the user authentication by using the biometric recognition data. Alternatively, the security processor system further includes: a biometric recognition authenticator, configured to perform the user authentication by using the biometric recognition data. When the dedicated biometric recognition authenticator is used, the biometric recognition authenticator is equivalent to a hardware accelerator, and equivalently, a user authentication function is actually implemented by using the dedicated accelerator, so that the security and a speed are higher. Oppositely, if the user authentication is implemented by using the security processor, costs for manufacturing and designing the dedicated accelerator can be saved.

According to the description of the first aspect, in a possible implementation, the multiple interfaces further include a storage interface, configured to be coupled to a third memory, where the third memory is configured to store the security operating system software and the at least one security software application; and the security processor is configured to: read the security operating system software and the at least one security software application from the third memory by using the storage interface, and load the security operating system software and the at least one security software application to the first memory to execute the security operating system software and the at least one security software application. In this implementation, the third memory is coupled to the security processor system through the dedicated storage interface. In this way, the security operating system software and the at least one security software application are both read by using the dedicated storage interface without relying on the TEE of the central processing unit, so that higher security can be implemented. Optionally, the third memory is integrated on a second semiconductor chip different from the first semiconductor chip. Optionally, the third memory is a nonvolatile memory, and may be a flash memory (Flash Memory). Optionally, the third memory is dedicated to storing the security operating system software and the at least one security software application, and is not configured to store insecure common software, so that higher security is implemented.

According to the description of the first aspect, in a possible implementation, the biometric recognition includes at least one of the following: fingerprint recognition, iris recognition, voiceprint recognition, human face recognition, or smell recognition. Correspondingly, the biometric recognition sensor may include at least one of the following: a fingerprint sensor, an iris sensor, a voiceprint sensor, an image sensor, or a smell sensor. Correspondingly, the biometric recognition input interface may include at least one of the following: a fingerprint input interface, an iris data input interface, a voiceprint input interface, a human-face image input interface, or a smell data input interface.

According to a second aspect, an embodiment of the present invention further provides a processing device, including the SoC according to the first aspect or any possible implementation of the first aspect. The processing device further includes a fourth memory integrated on a third semiconductor chip, where the SoC is coupled to the fourth memory through an inter-chip interface, and the fourth memory includes a secure storage area and a common storage area that are mutually isolated; the secure storage area is used to store the security operating system software and the at least one security software application; the common storage area is used to store the general-purpose operating system software; the at least one central processing unit is configured to: obtain the general-purpose operating system software from the common storage area by using the inter-chip interface, and execute the general-purpose operating system software; and the security processor is configured to: obtain the security operating system software and the at least one security software application from the secure storage area by using the inter-chip interface, a system bus, and a security bus, and execute the security operating system software and the at least one security software application. In the second aspect, both secure software and insecure software may be stored in the fourth memory. Therefore, hardware reuse is implemented, and costs are reduced. Optionally, the processing device is a mobile terminal. Optionally, the fourth memory is a nonvolatile memory, for example, an EMMC (Embedded Multi Media Card, embedded multimedia card) or a UFS (Universal Flash Storage, universal flash storage).

According to a third aspect, an embodiment of the present invention further provides a data processing method. The method is performed by the SoC according to the first aspect or any possible implementation of the first aspect. The method includes at least: exchanging NFC information related to the mobile payment with an NFC peer through an NFC interface; receiving biometric recognition data from a biometric recognition sensor, where the biometric recognition data is used for user authentication based on biometric recognition in the mobile payment; and displaying at least one item of display information to a user by using a user interface (UI). Optionally, the display information includes at least one of a user information input interface, a transaction interface of the mobile payment, or a transaction success interface.

Optionally, according to the description of the third aspect, in a possible implementation, the user interface is formed as driven by UI software that is executed by the at least one central processing unit and that is based on the general-purpose operating system software, or the user interface is formed as driven by secure user interface software in the at least one security software application executed by the security processor.

According to the embodiments of the present invention, the security processor system receives various types of information by using a dedicated interface of the security processor system without relying on a conventional TEE, so that security is improved.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention or the prior art, and a person of ordinary skill in the art may still derive other drawings from these accompanying drawings without creative efforts.
FIG. 1 is a simplified schematic structural diagram of a simplified mobile terminal that can execute secure mobile payment software application in a mobile payment scenario in the prior art;
FIG. 2 is a simplified schematic diagram of a mobile terminal according to an embodiment of the present invention;
FIG. 3 is a simplified schematic diagram of a security processor system according to an embodiment of the present invention;
FIG. 4 is a simplified schematic diagram of an application manner of multiple interfaces of a security processor system according to an embodiment of the present invention;
FIG. 5 is a simplified schematic diagram of a secure storage manner of a boot program instruction in a security processor system according to an embodiment of the present invention;
FIG. 6 is a simplified schematic diagram of an anti-attack sensor according to an embodiment of the present invention;
FIG. 7 is a simplified schematic diagram of a hierarchical layout of an anti-attack metal layer on a semiconductor chip according to an embodiment of the present invention;
FIG. 8 is a simplified schematic diagram of an anti-attack metal layer in a layout of a semiconductor chip according to an embodiment of the present invention;
FIG. 9 is a simplified schematic diagram of an application scenario of using a system memory as a memory of a security operating system software and the at least one security software application according to an embodiment of the present invention;
FIG. 10 is a simplified schematic diagram of an application scenario of using a dedicated security memory as a memory of a security operating system software and the at least one security software application according to an embodiment of the present invention;
FIG. 11 is a schematic flowchart of a mobile payment-related method according to an embodiment of the present invention;
FIG. 12 is a simplified schematic diagram of an application scenario of encrypting a speech signal by using a security processor system according to an embodiment of the present invention;
FIG. 13 is a simplified schematic diagram of an application scenario of performing, by using a cloud server, user authentication based on fingerprint data according to an embodiment of the present invention;
FIG. 14 is a simplified schematic diagram of an application scenario of acquiring and storing fingerprint data according to an embodiment of the present invention; and
FIG. 15 is a simplified schematic flowchart of a processing method in a mobile payment process according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

In the embodiments of the present invention, a mobile terminal may also be referred to as user equipment (UE), a wireless terminal, or a user terminal, and may enjoy a wireless access service of a service station or a wireless access point. The service station or the wireless access point is generally a base station, for example, an eNodeB or a NodeB in LTE (Long Term Evolution), or may be an access point configured to connect user equipment to a mobile communications network, for example, a base station controller in a GSM mode. When the service station provides a connection service to a mobile terminal, one or more cells may be formed. One cell may geographically cover a particular range and occupy a carrier segment or a frequency band segment in a frequency domain. Specifically, the mobile terminal and the service station may implement a communication process by executing a wireless communications protocol. The wireless communications protocol includes but is not limited to various cellular wireless communications protocols such as GSM, UMTS, WiMAX, TDS-CDMA, CDMA2000, LTE, or 5G.

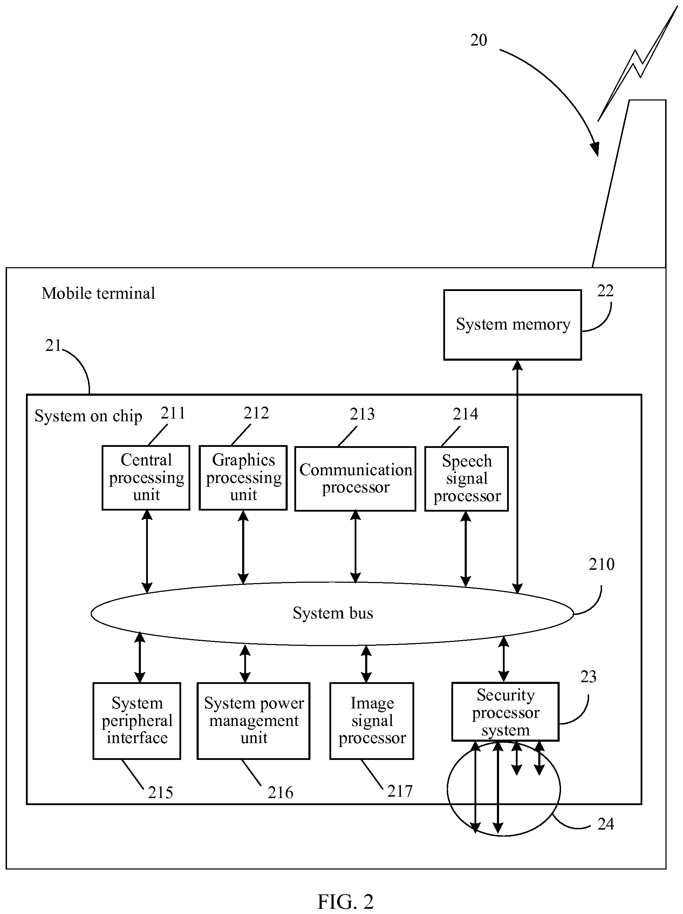

FIG. 2 is a simplified schematic diagram of a mobile terminal 20 according to an embodiment of the present invention. The mobile terminal 20 may be user equipment (User Equipment, UE), for example, various types of portable terminal devices such as a mobile phone, a tablet computer, or a wearable device. The mobile terminal 20 may specifically include a system on chip 21 and a system memory 22. The system on chip 21 may be coupled to the system memory 22 through a dedicated interface.

The system on chip (SoC) used in this embodiment of the present invention is a system manufactured on a same semiconductor chip or semiconductor substrate by using an integrated circuit technology. The semiconductor chip is also briefly referred to as a chip, and may be a set of integrated circuits formed on an integrated circuit substrate (which is usually a semiconductor material such as silicon) by means of manufacturing of the integrated circuit technology. An external layer of the semiconductor chip is usually packaged by a semiconductor package material. The integrated circuit may include various types of functional devices. Each type of functional device includes a logic gate circuit or a transistor such as a metal-oxide-semiconductor (Metal-Oxide-Semiconductor, MOS) transistor, a bipolar transistor, or a diode, or may include another component such as a capacitor, a resistor, or an inductor. The functional device may operate independently or operate under the action of necessary drive software, and may implement various functions such as communication, operation, or storage. Therefore, functional devices or modules of the apparatus mentioned in the embodiments of the present invention may be hardware, and each functional device may include multiple logic gate circuits or transistors. In this embodiment, the system memory 22 and the system on chip 21 are located on different semiconductor chips respectively. For example, the system on chip 21 is located on a first semiconductor chip, and the system memory 22 is located on a third semiconductor chip. Optionally, the system memory 22 is a nonvolatile memory, for example, an EMMC or a UFS.

In FIG. 2, the system on chip 21 may include various types of functional devices, for example, a system bus 210, at least one processor coupled to the system bus 210, and a security processor system 23 coupled to the system bus 210. Security isolation exists between the security processor system 23 and another component, that is, the at least one processor, in the system on chip 21. The at least one processor may selectively include at least one central processing unit 211, a graphics processing unit 212, a communication processor 213, a speech signal processor 214, a system peripheral interface 215, a system power management unit 216, and an image signal processor (ISP, Image Signal Processor) 217. The security processor system may include one or more interfaces 24. The interface 24 may include an interface coupled to another component outside the system on chip 21 or an interface coupled to another component in the system on chip 21.

In each embodiment of the present invention, the security isolation can be used to restrict access of the at least one processor to a device or a module in the security processor system 23. Under the security isolation, the at least one processor including the central processing unit 211 cannot directly access the random access memory 32 or at least one register in the security processor system 23, and therefore, cannot randomly read data or information in the security processor system 23.

In FIG. 2, the at least one central processing unit 211 is configured to: execute general-purpose operating system software, and communicate with the security processor system 23 through the system bus 210 under the action of the general-purpose operating system software. The at least one central processing unit 211 may be implemented based on an advanced reduced instruction set computing machine (Advanced RISC Machine, ARM) architecture, an Intel X86 architecture, or a million instructions per second (Million Instructions Per Second, MIPS) architecture. This is not limited in this embodiment. A larger quantity of central processing units 211 indicates a stronger capability to process data. The general-purpose operating system software is a general-purpose software platform executing various types of common software applications. The general-purpose operating system software may be an Android operating system, a Windows operating system, or an iOS operating system.

In FIG. 2, the graphics processing unit 212 is configured to process an image signal, for example, process a video image signal or a picture image signal, or may selectively process a 3D (three dimensions, 3 Dimensions) image signal. The system power management unit 216 is configured to control system power consumption of the system on chip 21, for example, manage and control a clock and a working voltage of the system on chip 21 or at least one component in the system on chip 21, for example, perform AVS (adaptive voltage scaling, Adaptive Voltage Scaling), DVS (dynamic voltage scaling, Dynamic Doltage Scaling), or clock frequency adjustment. There may be multiple system peripheral interfaces 215 that are respectively configured to be coupled to multiple peripheral devices, outside the system on chip 21, of the mobile terminal 20. For example, the peripheral device may be at least one of a USB device, a display, a sensor, a camera, a headset, or a loudspeaker. The sensor may be a gravity accelerator, a gyroscope, or an optical sensor. The image signal processor 217 may be configured to process an image signal acquired by a camera of the mobile terminal 20, to obtain a processed acquired image. The image may be further processed by the graphics processing unit 212.

The communication processor 213 in FIG. 2 may include multiple processors performing different communication functions. For example, the communication processor 213 may selectively include a cellular communication processor or a short-range communication processor. The cellular communication processor may support at least one of the following cellular wireless communications protocols: GSM, UMTS, WiMAX, TDS-CDMA, CDMA2000, LTE, or 5G. The short-range communication processor may support at least one of infrared, WiFi, Bluetooth, or LTE D2D. Optionally, each type of communication processors may include an RF processor configured to process a radio frequency (RF) signal and a baseband communication processor configured to perform baseband communication processing or a communications protocol algorithm. Alternatively, each type of communication processors may include a baseband communication processor only, and correspondingly, an RF processor may be disposed outside the system on chip 21. That is, if the system on chip 21 is integrated on the first semiconductor chip, the RF processor may be integrated on a chip different from the first semiconductor chip.

The speech signal processor 214 in FIG. 2 is configured to process a speech signal. The speech signal processor 214 may include at least one of a HiFi processor or a speech codec. The HiFi processor may be configured to implement processing such as echo cancellation, smoothing, or timbre enhancement on the speech signal. The speech codec may be configured to implement speech coding and decoding operations, to implement conversion between the speech signal in a digital form and a natural analog speech signal. Generally, the speech signal processor 214 may include a HiFi processor only. The speech codec includes an analog circuit, and may be implemented on another semiconductor chip that is disposed outside the system on chip 21. This is not limited in this embodiment.

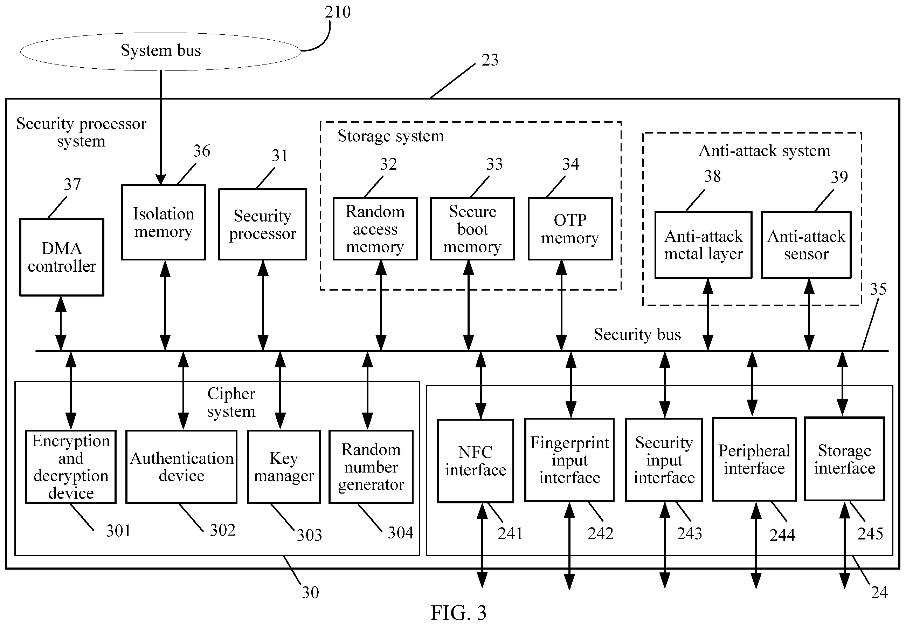

FIG. 3 describes the security processor system 23 provided in this embodiment of the present invention. in this embodiment, the security processor system 23 may be further configured to implement more security application functions in addition to a function similar to a secure element in the prior art or a SIM function, and operates as a scheduling and execution center of the security processor system 23. The security processor system 23 includes a security bus 35, and a security processor 31, a random access memory (RAM) 32, a secure boot memory 33, an OTP memory 34, and the multiple interfaces 24 that are coupled to the security bus 35. The random access memory 32 is a volatile memory. The secure boot memory 33 is a nonvolatile memory. In FIG. 3, the random access memory 32, the secure boot memory 33, and the OTP memory 34 are included in one storage system. Alternatively, the memories may not be included in one system, but may be independent of each other, and are not closely associated in a circuit structure. A specific implementation is not limited in this embodiment.

The security processor 31 is configured to execute security operating system software and at least one security software application based on the security operating system software, where the at least one security software application includes mobile payment software. The security processor can implement mobile payment by executing the mobile payment software. Optionally, the at least one security software application may further include SIM card software application. The SIM card software application includes but is not limited to virtual SIM software or SIM feature software application customized by a communication operator. The security processor 31 equivalently implements the function of the secure element in the prior art, and may further integrate another function, to expand a security application scenario of the system on chip 21. The random access memory 32 is configured to provide storage space used by the security processor 31 to execute the security operating system software and the at least one security software application. The random access memory 32 may be configured to store the security operating system software and the at least one security software application that are loaded, and may be further configured to store secure temporary data generated when the security operating system software and the at least one security software application are executed. After being powered on, the security processor 31 may load the security operating system software and the at least one security software application to the random access memory 32, and execute corresponding software by using internal storage space of the random access memory 32. The secure temporary data is intermediate data, an intermediate operation result, or other information that is related to the security software application or executing of the security software application and that does not need to be stored for a long time, for example, various types of intermediate operation result data or configuration data during operation processing, where the secure temporary data is generated when the security processor 31 executes the security operating system software and the at least one security software application. In this case, the random access memory 32 equivalently implements a memory function of a computer, and is a volatile storage device that may be any one of an SRAM, a DRAM, an SDRAM, or a DDR SDRAM (double data rate synchronous dynamic random access memory). The random access memory 32 is integrated in the system on chip 21. Therefore, the random access memory 32 may use a manufacturing technology the same as that of another component in the system on chip 21. The technology is relatively easy to implement. The security processor 31 may be configured to: guide initialization of another component in the security processor system 23 during a power-on startup process, and load the security operating system software and the at least one security software application to the random access memory 32, to perform a related operation. The security processor 31 may be a processor whose operation speed or implementation complexity is lower than that of the at least one central processing unit 211, but usually has lower power consumption and higher security. For example, the security processor 31 may be a processor of an ARM architecture, or may be another dedicated anti-attack processor, or may be a digital signal processor (DSP).

The security operating system software executed by the security processor 31 may be a chip operating system (Chip Operating System, COS). The COS is also referred to as a COS image, and may have a function of operating system software in a resident smart card or a financial integrated circuit (Integrated Circuit, IC) card. In this case, the security processor system 23 has functions of a conventional secure element, and the resident smart card or the financial card, and is configured to provide, to an external POS machine, a card reader, or a cloud financial server, data for a mobile payment service such as card swiping, for example, data related to banking and financial services or personal account data of a user such as a personal account, a password, or various types of verification information used by a bank server to verify a personal account. In addition, the COS image may be an operation platform receiving and processing external payment information (for example, various types of payment information sent by the financial server, the card reader, or the POS machine), and may be selectively configured to execute various instructions sent from the outside, for example, an operation such as an authentication operation. The COS is usually designed based on a JAVA computer programming language. The COS may be preset in the security processor system 23, and the mobile terminal 20 may dynamically download and install various types of security software applications, for example, various types of financial software application, based on the COS. A specific design of the COS is content belonging to the prior art, and is not discussed in this application.

In FIG. 2, communication between the at least one central processing unit 211 and the security processor system 23 includes exchange of data or exchange of an instruction. The instruction may be an instruction for the at least one central processing unit 211 to control or operate the security processor system 23, and includes but is not limited to a startup instruction, a disable instruction, a restart instruction, a sleep instruction, an instruction for entering or exiting a low power consumption state, or an operation suspension or recovery instruction, to instruct the security processor system 23 to enter a status corresponding to each instruction. For example, when the central processing unit 211 sends a sleep instruction to the security processor system 23, the security processor system 23 may enter a sleep state in response to the instruction. By means of the foregoing exchange process, an operating state of the security processor system 23 may be controlled by the at least one central processing unit 211, but security of data in the security processor system 23 is not affected. In addition, optionally, the instruction may be further used to implement another control process, for example, control an operating status. The another control process may specifically include: controlling a working voltage, a working clock frequency, or an information processing rate of the security processor system 23 or at least some components in the security processor system 23. This is not limited in this embodiment.

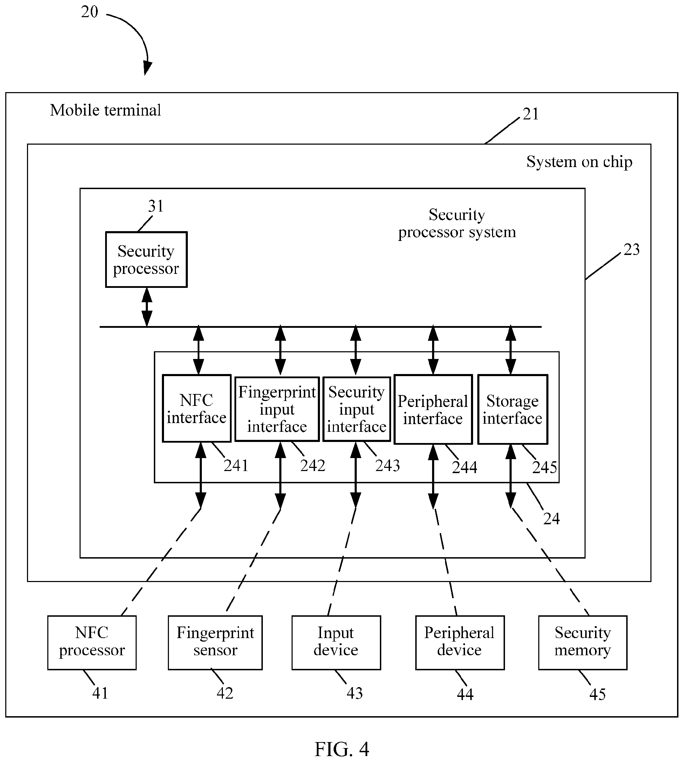

The multiple interfaces 24 in FIG. 3 may flexibly adapt to different use scenarios, and may selectively include an NFC interface 241 and a fingerprint input interface 242. Further, as shown in FIG. 4, the NFC interface 241 is configured to exchange NFC information related to the mobile payment with an NFC peer through an NFC processor 41. The NFC information includes at least one of a mobile payment instruction, mobile payment data, or NFC authentication information. The NFC processor 41 is a processor processing an NFC communication signal, and may be integrated in the communication processor 213 to reduce manufacturing costs of the entire system, or may be located on an independent semiconductor chip in the mobile terminal 20 and outside the system on chip 21. The NFC processor 41 may include at least one of an NFC baseband processor or an RF processor. Usually, the NFC processor 41 is also referred to as an NFC controller, and is configured to implement short-range contactless data communication with the NFC peer, to read, write, or exchange data. The NFC peer is a device exchanging NFC data and instructions with the NFC processor 41 in the mobile terminal 20, and may be a POS machine. Specifically, the security processor 31 is configured to: implement an operation and processing related to the mobile payment, and exchange, through the security bus 35, the NFC information with the NFC processor 41 that is coupled to the NFC interface 241. The NFC information is sent by the NFC processor 41 to the NFC peer or is received from the NFC peer. For example, the NFC peer may be NFC authentication information related to the mobile payment, a mobile payment amount, mobile payment request or response information, or the like. The NFC processor 41 may support an NFC communications protocol or an RFID (Radio Frequency Identification, radio frequency identification) communications protocol. After the security processor 31 is powered on and started, if a mobile payment function needs to be implemented, the security processor 31 executes mobile payment software, sends a mobile payment request to the NFC peer through the security bus 35, the NFC interface 241, and the NFC processor 41, receives a mobile payment response from the NFC peer, further exchanges, with the NFC peer, NFC authentication information for performing two-way NFC authentication, and transmits, to the NFC peer, a payment amount determined by a user. The NFC interface 241 may be a single wire protocol (SWP, Single Wire Protocol) interface, or certainly, may be an interface of another type, for example, a serial peripheral interface (SPI, Serial Peripheral Interface), a general purpose input/output (General Purpose Input Output, GPIO) interface, or an inter-integrated circuit (Inter-Integrated Circuit, I2C) interface.

In FIG. 4, the fingerprint input interface 242 is coupled to a fingerprint sensor 42, and is configured to receive fingerprint data from the fingerprint sensor 42. The fingerprint data is used for user authentication based on fingerprint recognition in the mobile payment. The fingerprint sensor 42 is usually a device located in the mobile terminal 20 and outside the system on chip 21. The fingerprint sensor 42 acquires fingerprint data of a user, and transmits the fingerprint data to the security processor 31 or another authentication element through the fingerprint input interface 242, to facilitate user identity authentication. The mobile payment can be performed or further performed only when the user authentication based on fingerprint recognition succeeds. The fingerprint input interface 242 may be an SPI, or certainly, may be an interface of another type. Further, the fingerprint input interface 242 may be configured to: acquire fingerprint data of the user for the first time, and further store the fingerprint data in a security memory 45 by using a storage interface 245, or transmit the fingerprint data to the system bus 210 through an isolation memory 36 or a bus bridge and further transmit the fingerprint data to the system memory 22 for storage. When user authentication needs to be performed, the security processor 31 or another component in the security processor system 23, for example, a fingerprint recognizer, may read the stored fingerprint data from the security memory 45 or the system memory 22, and compare the fingerprint data with newly acquired fingerprint data, to implement the user authentication.

It should be understood that although this embodiment of the present invention describes the interface 242 by using fingerprint recognition as an example, actually, the interface 242 may be replaced with an interface of another type, for example, an interface configured to transmit iris data, voiceprint data, human face data, or smell data. In this case, the user authentication is not authentication based on fingerprint recognition anymore, but may be based on iris recognition, voiceprint recognition, human face recognition, or smell recognition. A corresponding sensor may be: an iris sensor, a voiceprint sensor, an image sensor configured to acquire a human face image, or a smell sensor. That is, related user identity authentication can be implemented by acquiring particular biometric recognition data of a user, and transmitting the biometric recognition data to the security processor system 23 through a related interface. Certainly, the security processor system 23 may include a biometric recognition input interface supporting all the foregoing types of biometric recognition data, to implement more flexible user identity authentication. The accompanying drawings related to the embodiments are merely schematic drawings. The one or more biometric recognition input interfaces may be SWP interfaces, or certainly, may be interfaces of another type, for example, SPI interfaces or I2C interfaces.

Referring to FIG. 3 and FIG. 4 together, further, the multiple interfaces 24 may further include a security input interface 243, a peripheral interface 244, and the storage interface 245. The security input interface 243 is configured to receive user information that is input by a user and that is related to the mobile payment. Optionally, the user information includes a password, a user instruction, or a financial transaction amount that is input by the user. The user instruction may be an instruction for agreeing to, stopping, or continuing the mobile payment. Therefore, the security input interface 243 needs to be coupled to an input device 43, to receive the user information by using the input device 43. The input device 43 may be a touchscreen or a key that is located in the mobile terminal 20 and that is configured to perform inputting. The peripheral interface 244 is configured to indicate, by using a peripheral device 44, to the user that the mobile payment is performed. For example, the peripheral device 44 may be an indication device, and the peripheral interface 244 is coupled to the indication device 44. The indication device 44 may be an indicator, a loudspeaker configured to play a sound, or a vibrator, and is configured to prompt, by using a light signal, a sound, or vibration, the user that the mobile payment is being performed, has been performed, or is to be performed. The security input interface 243 may be an I2C interface or an interface of another type. The peripheral interface 244 may be a GPIO interface or an interface of another type.

The storage interface 245 may be coupled to a security memory 45 outside the system on chip 21, and the storage interface 245 may be an SPI interface or an interface of another type. The security memory 245 may be configured to store the security operating system software and the at least one security software application. Optionally, the security memory 45 includes a memory having enhanced features such as preventing physical and logical attacks, so as to securely store the security operating system software and the at least one security software application. The security processor 31 is configured to: read the security operating system software and the at least one security software application from the security memory 45 by using the storage interface 245, and execute the security operating system software and the at least one security software application. The storage interface 245 is a dedicated interface. The security memory 45 is a processor dedicated to security processing. In this way, the security operating system software and the at least one security software application are both read by using the dedicated storage interface 245 without relying on a TEE of the central processing unit 211, so that higher security can be implemented. The security memory 45 may be an erasable nonvolatile memory, for example, a flash. The security memory 45 is integrated on a second semiconductor chip different from the first semiconductor chip on which the system on chip 21 is located. Because the security memory 45 is dedicated to storing the security operating system software and the at least one security software application, and is not configured to store insecure software, higher security is implemented. Data stored in the security memory 45 is different from intermediate data or temporary data, and can be stored for a long time. On the contrary, temporary data, also known as intermediate data or memory data, stored in the random access memory 32 is process data generated by executing software, does not need to be stored for a long time, and may be lost as a device or an apparatus is powered off. The security processor 31 may load the security operating system software and the at least one security software application from the security memory 45 to the random access memory 32 after the security processor 31 is powered on or based on trigger of a user instruction or another condition. The random access memory 32 provides storage space for executing related software.

Alternatively, with development of a storage technology, the security memory 45 may be replaced with an internal memory in the security processor system 23 in function. The internal memory may be a ROM on chip, or may be an electrically erasable programmable read-only memory (Electrically Erasable Programmable Read-Only Memory, EEPROM) or another nonvolatile memory in chip, is configured to store the security operating system software and the at least one security software application, and is a nonvolatile memory. The internal memory enables the security processor system 23 to store the security operating system software and the at least one security software application without relying on an external memory. The security is high, but higher costs are caused.

In the corresponding system on chip 21 in FIG. 3 and FIG. 4, multiple processors including the at least one central processing unit 211 and the security processor system 23 are integrated, so that implementation costs and an area of the entire system can be reduced. In addition, the security isolation exists between the security processor system 23 and another insecure element to ensure the security. Besides, the NFC interface 241, the fingerprint input interface 242, the security input interface 243 configured to input the user information, and the peripheral interface 244 are integrated in the security processor system 23. Unlike a conventional system, related information acquisition from the interfaces does not rely on the TEE of the central processing unit 211, so that the NFC information, the fingerprint data, the user information, or the like is transmitted more securely.

In the system on chip 21, under the security isolation, the system bus 210 is coupled to the security bus 35 through the isolation memory 36. That is, the at least one processor located outside the security processor system 23 exchanges data or instructions with the security processor system 23 through the isolation memory 36. In an example, the at least one processor including the central processing unit 211 cannot directly access any component in the security processor system 23 except the isolation memory 36. For example, the at least one central processing unit 211 may be coupled to the security processor system 23 through the system bus 210 and the isolation memory 36 under the action of the general-purpose operating system software, to communicate with the security processor system 23. Content of the communication includes data or an instruction, for example, data is transmitted to at least one element in the security processor system 23. In this case, the isolation memory 36 is a dedicated interaction channel, or even a unique channel, for interaction between the security processor system 23 and the outside, that is, a mailbox (Mailbox) channel configured to exchange data or information, so that the at least one processor in the outside is prevented from directly accessing the random access memory 32 or any component or module in the security processor system 23, so as to improve the security.

Preferably, the isolation memory 36 is a volatile memory, for example, a RAM, but may be alternatively replaced with a nonvolatile memory, for example, a ROM. When needing to write data to the security processor system 23, one or more insecurity processors, for example, the central processing unit 211, in the system on chip 21 first write the data to the isolation memory 36, and then notify the security processor 31 in the security processor system 23 by using interrupt or other indication information, and the security processor 31 reads and transfers the data from the isolation memory 36. Reversely, the security processor 31 writes the data or information to the isolation memory 36, and instructs, by using interrupt or other indication information, another processor outside the security processor system 23 to read the data from the isolation memory 36.

Alternatively, the isolation memory 36 used in FIG. 3 of this embodiment may be replaced with a security isolation device of another type, for example, a bus bridge. The bus bridge is a bus bridging between the security bus 35 of the security processor system 23 and the system bus 210. The bus bridge is dedicated to transmitting data or information between two buses having different security, to replace a function of the isolation memory 36, and couples the system bus 210 to the security bus 35. Optionally, security processing may be further performed on the data transmitted on the bus bridge, to improve the security. For example, special encryption and decryption processing needs to be performed on the data transmitted on the bus bridge. This is not limited in this embodiment.

By implementing the security isolation by the security isolation device such as the isolation memory 36 or the bus bridge, the at least one processor outside the security processor system 23 cannot randomly access a memory or a register in the security processor system 23. The security processor system 23 may selectively transmit data required to be read by a processor coupled to the system bus 210, to the processor through the security isolation device. Data that the security processor system 23 does not require the processor to obtain is not transmitted to the processor through the security isolation device. For example, the data that the security processor system 23 does not require the processor to obtain may include fingerprint data obtained by using the fingerprint input interface 242, secure temporary data temporarily stored in the random access memory 32, or the security operating system software and the at least one security software application that are loaded to the random access memory 32.

The security processor system 23 and the at least one processor may be coupled through the dedicated transmission channel, to exchange data or instruction, so as to implement the security isolation. The isolation memory 36 or the bus bridge is a form of the dedicated interaction channel. The dedicated interaction channel may be a unique channel coupled between the security processor system 23 and the at least one processor.

The security processor system 23 in FIG. 3 or FIG. 4 may further include a secure boot memory 33 coupled to the security bus 35. The secure boot memory 33 stores a boot program instruction for initialization of the security processor 31. Before executing the security operating system software and the at least one security software application, the security processor 31 reads the boot program instruction from the secure boot memory 33 to initialize the security processor 31. Specifically, in a startup process of the mobile terminal 20, the at least one central processing unit 211 may be powered on first, and then trigger the security processor system 23 to be powered on. In a power-on process of the security processor system 23, similar to a BIOS in a conventional PC, the secure boot memory 33 may ensure that each startup of the security processor system 23 starts from reading the boot program instruction in the secure boot memory 33, to ensure startup security. The secure boot memory 33 is preferably a ROM on chip. For example, when the security processor system 23 is powered on, the security processor 31 is configured to: read the boot program instruction from the secure boot memory 33, and load the security operating system software to the random access memory 32 under the action of the boot program instruction, to execute the security operating system software. Further, the security processor 31 may start one or more security software applications after the security processor system 23 is powered on, that is, load the one or more security software applications to the random access memory 32, to execute the security application system software. Alternatively, the security processor 31 may receive trigger of a user instruction or another condition to start the security software application.

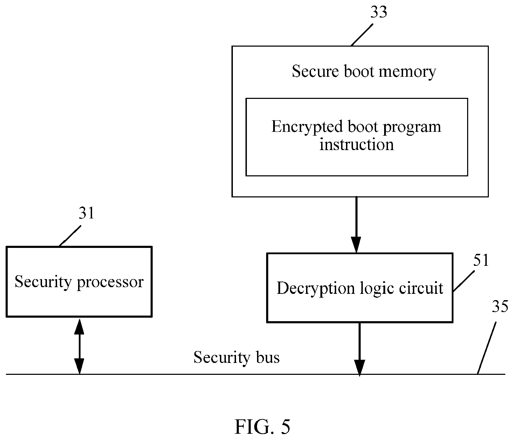

Further, as shown in FIG. 5, when the security processor 31 reads the boot program instruction from the secure boot memory 33, decryption processing may be performed. That is, the boot program instruction stored in the secure boot memory 33 is an encrypted boot program instruction. When the security processor 31 obtains the boot program instruction from the secure boot memory 33, the boot program instruction is decrypted by a decryption logic circuit 51 to obtain a decrypted boot program instruction, where the decrypted boot program instruction is used to initialize the security processor 31, to further ensure the startup security. The decryption logic circuit 51 may be hidden in a layout of the system on chip 21, that is, circuits in different parts of the decryption logic circuit 51 may be dispersed in different parts of the layout of the system on chip 21. Therefore, the decryption logic circuit 51 is difficult to be cracked from the outside, and the security is improved.

Further, the OTP memory 34 in FIG. 3 is configured to store a security parameter of the security processor system 23. The security parameter may selectively include at least one of a root key, a calibration parameter, a configuration parameter, or an enable parameter. For example, the root key is used to generate another key for performing at least one type of encryption and decryption by the security processor system 23. The calibration parameter includes a parameter for performing calibration on at least one component in the security processor system 23, for example, one or more calibration parameters of an anti-attack sensor 39 for calibrating the anti-attack sensor 39. The configuration parameter includes a configuration parameter of at least one component in the security processor system 23, for example, a configuration parameter of a random number generator 304, for example, configuration of a length of a random number generated by the random number generator 304. The enable parameter includes a parameter for controlling at least one component in the security processor system 23 to turn on or turn off. The enable parameter may enable some components, for example, control enabling of the anti-attack sensor 39. The enable parameter is configured by performing programming in the OTP memory 34. When the enable parameter is configured as valid, a related component, for example, the anti-attack sensor 39, is enabled, so that after the system on chip 21 is manufactured, whether a function of at least one component in the system on chip 21 is available is still configurable. The enable parameter may further include a life management cycle parameter, used to manage some components in the security processor system 23 in different periods of time. For example, whether some keys stored in the security processor system 23 are readable may be configured by using the life management cycle parameter. After the system on chip 21 is manufactured, for a debugging need of an OEM (original equipment manufacturer, Original Equipment Manufacturer) vendor using the system on chip 21, the OEM vendor needs to read a related key, and after debugging is completed, may configure a related life management cycle parameter in the OTP memory 34. The parameter defines that the key is unreadable. The security processor 31 or another component may learn, by reading the life management cycle parameter in the OTP memory 34, that the related key is configured as unreadable. Therefore, the key cannot continue to be read, thereby avoiding leakage of the key.

The security parameter may be programmed in the OTP memory 34, to calibrate, configure, or set the security processor system 23, or close or disable functions of some devices in the security processor system 23. Therefore, the OTP memory 34 makes some internal functions of the security processor system 23 still configurable or changeable after the system on chip 21 is manufactured. This improves design flexibility after the manufacturing is completed. Further, the OTP memory 34 is further configured to store a patch program instruction of the boot program instruction for the initialization of the security processor 31. The patch program instruction may be a supplement to the boot program instruction or a replacement of some programs in the boot program instruction. For example, after the system on chip 21 is manufactured, if it is found that the boot program instruction applied to the security processor system 23 has a deficiency, and information or data in the secure boot memory 33 is not rewritable, in this case, a related patch program instruction may still be programmed in the OTP memory 34 to compensate for the deficiency or an error of the existing boot program instruction, so that implementation is more flexible. When the security processor 31 is started, the security processor 31 may read a part of the programmed patch program instruction from the OTP memory 34, to replace at least one part of the boot program instruction read from the secure boot memory 33. For example, when reading some boot program instructions from the secure boot memory 33, the security processor 31 may jump to the OTP memory 34 to read a related patch program instruction, and may jump back to continue to read other boot program instructions of the secure boot memory 33 when necessary, to implement secure startup.

A person skilled in the art may understand that another security measure may be further added to the OTP memory 34. For example, measures are taken to improve the security, for example, using some security authentication devices to perform authentication on data or information that is read from the OTP memory 34, perform power supply exception detection and alarm on the OTP memory 34, perform read/write exception detection and alarm on the OTP memory 34, encrypt internally read information of the OTP memory 34, or disorder a data storage address in the OTP memory 34. The OTP memory 34 may be a nonvolatile memory.

Because the random access memory 32 in FIG. 3 is integrated in the system on chip 21, it is very difficult to implement the random access memory 32 by using an EEPROM due to a technology factor or other reasons, but the random access memory 32 may be implemented by using an SRAM, a DRAM, an SDRAM, or a DDR SDRAM. At present, a capacity of hundreds of KBs (kilobytes) may be reached. Data in the random access memory 32 may be encrypted data. Alternatively, data security of the random access memory 32 may be improved by using a security measure such as disordering a data storage address.

Further, the security processor system 23 further includes a DMA controller 37 coupled to the security bus 35. The DMA controller 37 is configured to: read data from the random access memory 32, and output the data to the security bus, or write the data to the random access memory 32 by using the security bus. For example, when data needs to be transmitted from the NFC interface to the random access memory 32 through the security bus 35, a related transmission operation may be performed by the DMA controller 37 instead of the security processor 31, so that data read or write efficiency is improved. Therefore, the DMA controller 37 in this embodiment of the present invention plays a role of replacing the security processor 31 to perform data transfer and migration. For a specific operating principle of the DMA controller 37, refer to a description in the prior art, and details are not described herein.

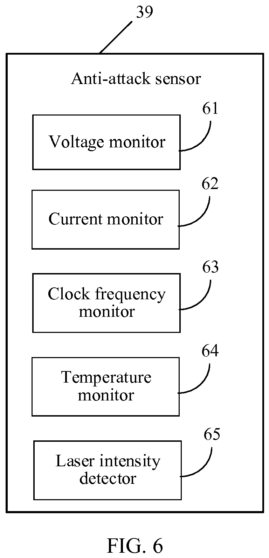

Further, the security processor system 23 further includes an anti-attack system, to improve the security. The anti-attack system may include various anti-attack measures or devices, for example, an anti-attack metal layer 38, and the anti-attack sensor 39. The anti-attack sensor 39 is configured to: detect whether various operating parameters of the security processor system 23 have an exception, generate a trigger signal when the exception occurs, and transmit the trigger signal to the security processor system 23, to trigger at least one of the following operations: the security processor system 23 performs an alarm, the security processor 31 resets, or the random access memory 32 or the at least one register in the security processor system 23 is reset or emptied. Specifically, the operating parameter includes at least one of a voltage, a current, a clock frequency, a temperature, or a laser intensity. Therefore, as shown in FIG. 6, the anti-attack sensor 39 may include one or more of a voltage monitor 61, a current monitor 62, a clock frequency monitor 63, a temperature monitor 64, or a laser intensity detector 65, and is configured to ensure the security of the security processor system 23.

In an implementation, the voltage monitor 61 is configured to: detect whether a voltage of the security processor system 23 or at least one component in the security processor system 23 is normal, and when the voltage is abnormal, report the exception to the security processor 31 or another element configured to receive the exception report in the security processor system 23. An alarm operation is performed by using the security processor 31 or the element. Determining whether the voltage is abnormal by the voltage monitor 61 may include comparing the detected voltage with a voltage threshold, or performing data matching, to determine whether the voltage falls within a normal range or reaches the preset voltage threshold. When the voltage falls within the normal range or does not reach the preset voltage threshold, the exception is not reported, or a normal status is reported. Otherwise, the voltage monitor 61 reports the exception. For example, the voltage monitor 61 may include a detection component (that is, a sensor) configured to sense a voltage and a determining component configured to perform comparison or matching processing. Specifically, when an alarm operation is performed, the security processor 31 or the element may send an alarm instruction to the peripheral interface 244 through the security bus 35, and send an alarm instruction signal to the peripheral device 44 through the peripheral interface 244, to alert the user. Alternatively, the security processor 31 may perform a reset operation after receiving the exception report, or selectively, the security processor 31 or the element may trigger the random access memory 32 or the one or more registers in the security processor system 23 to be reset or emptied. The voltage monitor 61 may recognize a voltage exception caused by an external attack, for example, an external voltage spike attack, and perform a corresponding operation, so as to avoid data or information leakage. Some calibration parameters of the voltage monitor 61 may be stored in the OTP memory 34.

Further, the current monitor 62 is configured to detect whether a current of the security processor system 23 or at least one component in the security processor system 23 is abnormal, and may selectively include a component for detecting the current and a component for determining a current exception, and perform a corresponding operation such as an alarm operation, reset, or empty when the exception occurs, to accurately recognize a current exception caused by an external attack.

The clock frequency monitor 63 is configured to: detect whether a working clock frequency of the security processor system 23 or at least one component in the security processor system 23 is abnormal, and perform a corresponding alarm operation or a reset operation when an exception occurs, and may selectively include a component for detecting the clock frequency and a component for determining a clock frequency exception, to accurately recognize a working clock exception or instability caused by an external attack. Because the clock of the entire system has a complex structure, multi-level frequency multiplication or frequency division is performed on a clock frequency transmitted to the security processor system 23, so that a frequency attack difficulty is increased. Reducing the clock frequency usually makes it easier to apply an attack from the outside, so the outside requires that the clock frequency of the working clock supplied to the security processor system 23 should be located and changed more easily. A complex clock change of the system makes it difficult for an external device to accurately locate a specific clock of the security processor system 23. Therefore, anti-attack detection can be implemented by using the clock frequency monitor 63 to detect a clock related to the security processor system 23. For example, both the working clock of the security processor system 23 and a source clock generating the working clock, that is, a frequency division or frequency multiplication clock of the working clock, may be detected.

Further, a principle of the temperature monitor 64 is similar to that of other detectors mentioned above. The temperature monitor 64 is configured to: detect whether a temperature of the security processor system 23 or at least one component in the security processor system 23 is abnormal, and perform a corresponding alarm operation or reset operation when an exception occurs, and may selectively include a component for detecting the temperature and a component for determining a temperature exception, to recognize an abnormal temperature change caused by an external attack to improve the security. The temperature monitor 64 configured to prevent an attack may be used with another temperature sensor configured to implement heat protection or heat reduction in the system on chip, so as to provide heat protection and further protect the system from being attacked and broken by a low temperature from the outside.

The laser intensity detector 65 is configured to: detect whether a laser signal intensity in the security processor system 23 or in an internal part of the security processor system 23 exceeds a preset threshold to recognize an exception, and perform a corresponding alarm, reset, or empty operation when the exception occurs. The laser intensity detector 65 is mainly configured to prevent an external laser attack. For example, when an external device intrudes the security processor system 23 by using a laser cutting technology, the laser intensity detector 65 can detect a laser signal, or can detect that an intensity of the laser signal exceeds the threshold, and trigger a corresponding operation, for example, the operation such as the alarm, reset, or empty operation described above.

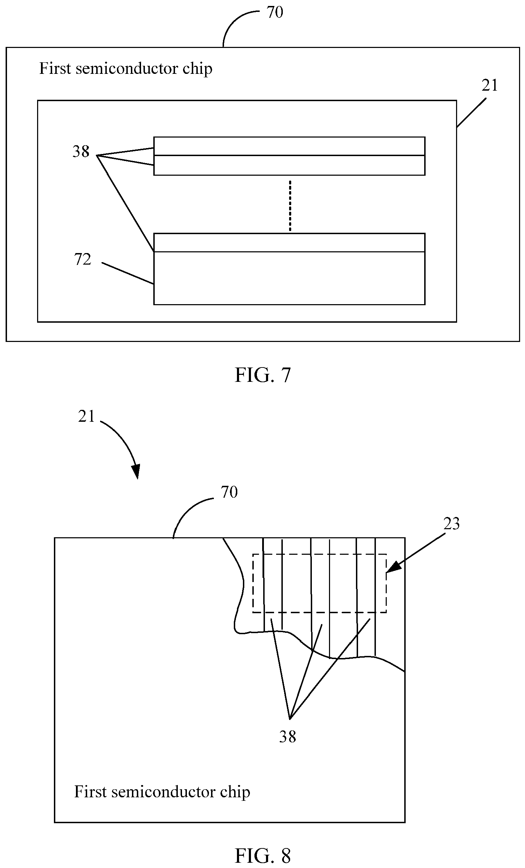

In the anti-attack system in FIG. 3, the anti-attack metal layer 38 is formed based on a metal mask layer. As shown in FIG. 7, FIG. 7 is a schematic sectional diagram of the first semiconductor chip 70 in a vertical direction. The first semiconductor chip 70 includes a semiconductor physical device 72 located at a bottom layer. The semiconductor physical device 72 includes all parts in the system on chip 21 except the anti-attack metal layer 38, including modules, functional devices, or circuits, and is configured to implement a signal or information processing function. For details, refer to the foregoing embodiment, for example, the description of each part corresponding to FIG. 2 to FIG. 4. One or more metal mask layers are usually located on the semiconductor physical device 72. The anti-attack metal layer 38 is formed from the one or more metal mask layers with special circuit design, and is manufactured by using a semiconductor integrated circuit manufacturing technology, to detect an external physical detection or attack. It can be understood that the anti-attack metal layer 38 may be formed by processing only a topmost metal mask layer or all the multiple metal mask layers. Therefore, the anti-attack metal layer 38 may be one or more layers, and cover the semiconductor physical device 72. Therefore, it can be understood that the anti-attack metal layer 38 in the system on chip 21 may be located on at least one top layer of multiple semiconductor layers formed by the first semiconductor chip 70. All components, modules, or units in the system on chip 21 except the anti-attack metal layer 38 may be located on a bottom layer of the multiple semiconductor layers. The at least one top layer is located on the bottom layer.

As shown in FIG. 8, FIG. 8 is a schematic diagram of a layout of the first semiconductor chip 70 in a horizontal direction. The anti-attack metal layer 38 may cover, in a mesh structure shown in FIG. 8, at least one layer 71 of the first semiconductor chip 70 in the layout. A size of an object used to perform an attack is usually larger than a distance between metal lines of the mesh structure of the anti-attack metal layer 38, and the object is unavoidably in contact with the mesh structure. In this way, an external intruding object can be detected. Alternatively, the anti-attack metal layer 38 may be of another shape in the layout other than the mesh structure. When the external object used to perform an attack, for example, a physical metal probe or a cutting tool, extends into the first semiconductor chip 70, the anti-attack metal layer 38 can detect intrusion of the object, and perform an anti-attack operation such as alarm, reset, or empty by using a circuit that is in the SoC and that is associated with the anti-attack metal layer 38. For example, the anti-attack metal layer 38 may generate an electrical signal when detecting the intrusion. The electrical signal may reflect a change of an electrical characteristic of the anti-attack metal layer 38 caused by the intrusion, for example, a change of a voltage or a current. The electrical signal may be detected by the circuit associated with the anti-attack metal layer 38. The circuit is coupled to the security processor system 23. When receiving the electrical signal generated by the anti-attack metal layer 38, the circuit may generate a trigger signal, and transmit the trigger signal to the security processor system 23, to trigger at least one of the following operations: the security processor system 23 performs an alarm, the security processor 31 resets, or the random access memory 32 or the at least one register in the security processor system 23 is reset or emptied. The anti-attack metal layer 38 may be a shielding (Shielding) metal layer, and may cover the entire system on chip 21 wholly located on the first semiconductor chip 70, or may merely cover the entire security processor system 23 or a key part of the security processor system 23 in the layout, for example, merely cover the security processor 31 or the random access memory 32, to improve the security and reduce costs brought by arranging the anti-attack metal layer 38. As shown in FIG. 8, the anti-attack metal layer 38 covers the entire security processor system 23 in the layout, to ensure the security.

Further, the system bus 210 or the security bus 35 may include at least one of an AHB or an APB. Different parts, elements, or circuits in the security processor system 23 may be further classified into different security levels. Connection is performed by using bus technologies of different levels, so that rate requirements and security requirements of different components in the security processor system can be satisfied. For example, the security bus 35 may use a bus transmission manner of combining the AHB and the APB. Security levels of the AHB and the APB are different, and transmission rates may also be different. For example, a transmission rate of the AHB may be higher than that of the APB, but a security level may be lower than that of the APB. Coupling between different components, for example, between the security processor 31 and a storage system or an anti-attack system may use an AHB technology, while coupling between the security processor 31 and a cipher system 30 uses an APB technology. A specific bus transmission manner may have another implementation, and details are not described herein. Further, to improve the security, data transmitted on the security bus 35 or a related address may be encrypted, scrambled, or subject to a CRC, so as to prevent the related data or address from being cracked from the outside, and ensure privacy and integrity of the data on the security bus 35 and the address. Specifically, when a read/write initiation component (Master) in the security processor system 23 accesses another component (Slave) by using the security bus 35, security processing such as scrambling or interleaving may also be performed on a read/write address of the security bus 35, that is, addresses of the components Master and Slave that occupy the security bus 35.

Further, in FIG. 3, the cipher system 30 includes at least one of the following: an encryption and decryption device 301, an authentication device 302, a key manager 303, or the random number generator 304. The encryption and decryption device 301 is configured to perform encryption and decryption processing or authentication processing on at least one type of data in the security processor system 23. For example, the encryption and decryption device 301 may encrypt data stored in the random access memory 32 by the security processor 31, and store encrypted data in the random access memory 32. Reversely, before the security processor 31 reads data from the random access memory 32, the encryption and decryption device 301 may decrypt the related data, and provide decrypted data to the security processor 31, so that the security processor 31 can process the decrypted data. Alternatively, the encryption and decryption device 301 may encrypt data or information transmitted to an external device by the security processor system 23 through any one of the interfaces 24, and decrypt data transmitted from the external device through a corresponding interface for the security processor system 23 to use. An encryption and decryption algorithm used by the encryption and decryption device 301 may be a symmetric encryption and decryption algorithm or an asymmetric encryption and decryption algorithm, or optionally, may be an authentication algorithm such as a hash algorithm. The encryption and decryption algorithm includes but is not limited to various cipher algorithms internationally regulated or regulated in China, for example, the DES (data encryption standard, Data Encryption Algorithm), the 3DES (triple data encryption standard, Triple DES), the AES (Advanced Encryption Standard, advanced data encryption standard), the RSA algorithm, the ECC (Elliptic Curves Cryptography, elliptic curves cryptography). The hash algorithm may include the MD5 (Message-Digest Algorithm 5, message-digest algorithm 5), the SHA (secure hash algorithm, Secure Hash Algorithm), or the like. In addition, the encryption and decryption device 301 may further support a dedicated encryption and decryption algorithm privately owned by each country, for example, an algorithm such as the SM2, the SM3, or the SM4 released by the Office of State Commercial Cryptography Administration. Optionally, the encryption and decryption device 301 further supports an encryption and decryption algorithm combination mode, for example, supports the HMAC-SHA256 (Hash Message Authentication Code-Secure Hash Algorithm 256, hash message authentication code-secure hash algorithm 256). Optionally, in hardware circuit implementation, the encryption and decryption device 301 may be further designed to use a technology for preventing a side channel attack (Side Channel Attack), to enhance security of the algorithm.

The authentication device 302 is configured to authenticate at least one type of data in the security processor system 23. The authentication may include hash (Hash) authentication. For example, authentication processing is performed on data exchanged by the security processor system 23 with the outside world through any interface. For example, when any component in the security processor system 23, for example, the security processor 21, needs to write data to the security memory 45, the authentication device 302 performs hash processing on the related data and writes data obtained after the hash processing to the security memory 45. When the security processor 21 needs to read the data from the security memory 45, the data is first sent to the authentication device 302 for performing a hash decryption operation. The data is considered as not intruded or changed only when hash decryption authentication succeeds, and the data is sent to the security processor 21. In this way, the security is ensured. Optionally, the authentication device 302 may be further configured to perform the user authentication based on fingerprint recognition mentioned in the foregoing embodiment.

In FIG. 3, the random number generator 304 is configured to generate a random number. The random number is used as a seed for generating a key for at least one type of encryption or a unique chip identifier. The unique chip identifier is used to identify the system on chip 21 or the security processor system 23. The random number may be a true random number or a pseudo-random number. The key manager 303 is configured to generate, distribute, or destruct, in the security processor system 23, a key for performing the encryption and decryption processing or the authentication. For example, when the encryption and decryption device 301 needs to perform encryption and decryption processing, the key manager 303 may receive a random number generated by the random number generator 304, generate, based on the random number, a key for the encryption and decryption, and provide the related key to the encryption and decryption device 301 for use. In addition, the key manager 303 may maintain the key to be valid in a preset time, and instruct the encryption and decryption device 301 not to continue to use the key when the time is over. That is, the key manager 303 destructs a key when the key expires. This ensures that a use period of any one or more keys is limited, and improves the security. The key manager 303 may obtain, when needing a new seed, the seed from the random number generator 304, generate a new key, and provide the new key to the encryption and decryption device 301 for use, so that an original key is replaced. It can be understood that one or more functions of the cipher system 30 may be implemented by the security processor 31 to reduce costs. However, if the independent cipher system 30 shown in FIG. 3 is used to implement the related function, it is equivalent to use a high-security hardware accelerator to implement the related function, so that an operation such as encryption and decryption can be separated from another operation of the security processor 31, and the security is improved.

In an optional implementation, the security processor 31 may be further configured to perform the user authentication by using the fingerprint data transmitted by the fingerprint input interface 242. Alternatively, the authentication function may be implemented by another fingerprint authenticator (not shown in the figure) in the security processor system 23. The fingerprint authenticator is equivalent to a hardware accelerator, to implement a higher processing speed and higher security.

In FIG. 4, the security operating system software and the at least one security software application are stored by using the security memory 45. Besides, in an alternative implementation, the security operating system software and the at least one security software application may be further stored by using the system memory 22. The system memory 22 may be located on a second semiconductor chip different from the first semiconductor chip on which the system on chip 21 is located. As shown in FIG. 2, the system on chip 21 may be coupled to the system memory 22 through an inter-chip dedicated interface. The system memory 22 may include a secure storage area and a common storage area that are mutually isolated. The secure storage area is used to store the security operating system software and the at least one security software application. The common storage area is used to store the general-purpose operating system software. The at least one central processing unit 211 is configured to: obtain the general-purpose operating system software from the common storage area by using the inter-chip interface, and execute the general-purpose operating system software. The security processor 31 is configured to: obtain the security operating system software and the at least one security software application from the secure storage area by using the inter-chip interface, the system bus 210, and the security bus 35, and execute the security operating system software and the at least one security software application. The secure storage area and the common storage area that are mutually isolated mean that the general-purpose operating system software executed by the central processing unit 211 or other common software based on the general-purpose operating system software can merely read/write the common storage area, but cannot read/write the secure storage area. The secure storage area is an area dedicated to executing a security application, and is accessed and read/written by the security processor 31. Both secure software and insecure software may be stored in the system memory 22, without relying on an extra dedicated memory similar to the security memory 45. Therefore, the costs are reduced. Optionally, the system memory 22 and the security memory 45 in each embodiment of the present invention may both be flash memories.

An embodiment of the present invention provides a system on chip 21 that can support multiple security application services. A security processor system 23 in the system on chip 21 may also be referred to as a security protection module (Security Protection Module, SPM), and is functionally similar to a secure element in a bank card, but implements higher security and integration. The security of the security processor system 23 may reach the CC EAL4+ (Common Criteria Evaluation Assurance Level 4+, common criteria evaluation assurance level 4+) applied to the financial industry, and the security processor system 23 implements security, reliability, and information privacy protection of various security application products or solutions. Compared with an existing non-integrated solution or low-integration solution, costs are greatly reduced, and complex debugging between chips and layout space on a PCB are not required. In addition, a central processing unit 211 in the system on chip 21 and the security processor system 23 use a totally same integrated circuit manufacturing technology, so that performance is better. In addition, in this solution of this embodiment, multiple external interfaces are integrated in the security processor system 23, and transmission of related data does not rely on a TEE of the central processing unit 211 anymore.

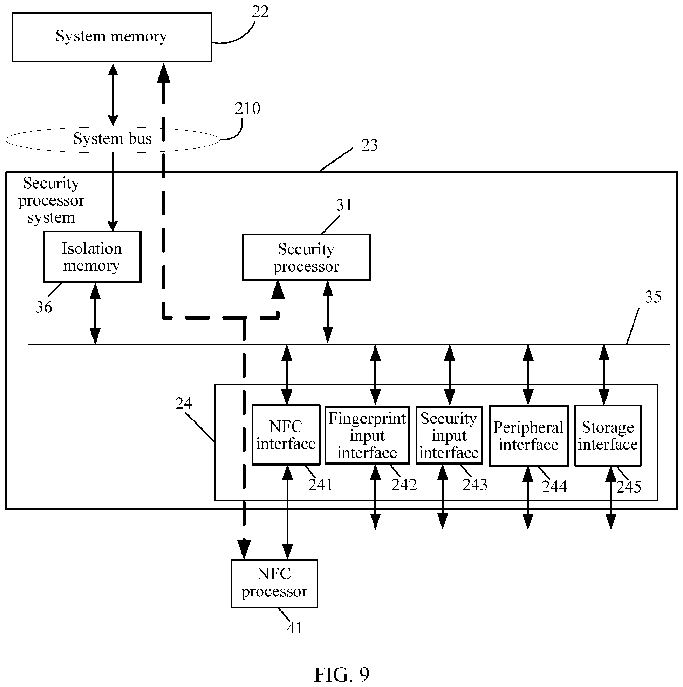

In an implementation, as shown in FIG. 9, FIG. 9 is a schematic diagram of an application scenario in which a system memory 22 is used as a memory of security operating system software and the at least one security software application. In this use scenario, any dedicated security memory may not be used, so that implementation costs are relatively low. Specifically, as shown by dashed lines in FIG. 9, a security processor 31 may access the system memory 22 through a security bus 35, an isolation memory 36 (or a bus bridge), and a system bus 210, and write data to a secure storage area in the system memory 22 or read data from the secure storage area, to read or write the security operating system software and the at least one security software application in the secure storage area. When data or information is exchanged between the secure storage area and the security processor 31, an encryption or authentication operation may be performed on the data or the information, to ensure data privacy and prevent the data from being tampered. The encryption or authentication operation has multiple specific operation forms, and details are not described herein. The security processor system 23 has a particular access permission for accessing the secure storage area. The security processor 31 may be further coupled to an NFC processor 41 through an NFC interface 241, exchanges NFC information related to mobile payment, for example, a mobile payment instruction, mobile payment data, or NFC authentication information, with an NFC peer through the NFC processor 41, performs an operation related to the mobile payment, and stores a result of the operation in the secure storage area. The result includes payment information of the current mobile payment, for example, a transaction amount or a transaction time.

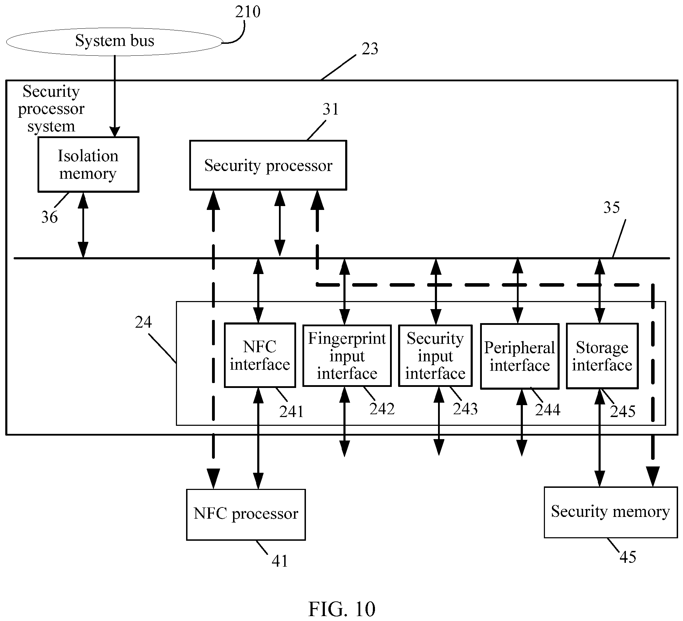

In another implementation, as shown in FIG. 10, FIG. 10 is a schematic diagram of an application scenario in which a dedicated security memory 45 is used as a memory of the security operating system software and the at least one security software application. Specifically, as shown by dashed lines in FIG. 10, the security processor 31 may access the security memory 45 through the security bus 35 and a storage interface 245, to read or write the security operating system software and the at least one security software application. For example, the security processor 31 receives NFC information related to mobile payment from the NFC peer through the NFC processor 41, performs a mobile payment operation processing operation, and stores a data result of the operation in the security memory 45. Compared with the application scenario of FIG. 9, in the scenario of FIG. 10, data transmission on the system bus 210 having a lower security level can be avoided, and a risk of exposing to-be-transmitted data can be reduced, so that security is higher.

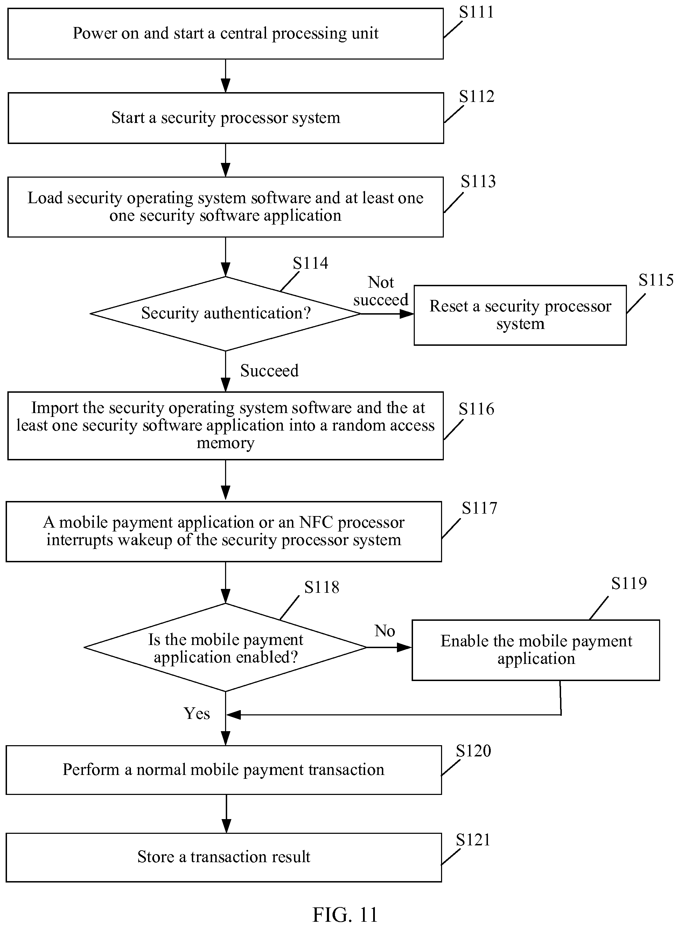

In an implementation, a schematic flowchart of performing a mobile payment-related method by the system on chip 21 may be shown in FIG. 11, including: in S111, the central processing unit 211 is powered on and started. In S112, after being started, the central processing unit 211 further triggers the security processor system 23 to start, including starting the security processor 31. In S 113, the security operating system software and the at least one security software application are loaded to the security processor system 23, for example, may be loaded to the security processor 31 or a cipher system 30. Specifically, related software data may be obtained from the dedicated security memory 45 or the secure storage area of the system memory 22, and is correspondingly loaded. In S114, the security processor 31 or the cipher system 30 performs security authentication on the security operating system software and the at least one security software application. For example, an authentication device 302 performs at least one operation of a program integrity check or a signature check, for example, selectively performs a CRC check. If the check does not succeed, in S115, the security processor system 23 is reset. For example, the security processor system 23 may be restarted selectively. If the check succeeds, in S 116, data of the related software is imported into a random access memory 32, so that the security processor 31 performs an operation on the related software by using storage space provided by the random access memory 32. When there is no security software application needing to be executed, the security processor system 23 or some components in the security processor system 23, for example, the security processor 31, may enter a low power consumption state, that is, a standby state. The security processor 31 may suspend working in this state, to reduce power consumption. In S 117, mobile payment software application or the NFC processor 41 wakes up the security processor system 23 by using the NFC interface 241. When there is a mobile payment application requirement, the NFC processor 41 or the mobile payment software application may be used to wake up the security processor system 23, so that the security processor system 23 or the security processor 31 in the security processor system 23 recovers from the lower power consumption state to a wakeup state. Optionally, in S118, the security processor 31 may determine whether the mobile payment software application is already started. If the application requirement is triggered by the NFC processor 41, the security processor 31 needs to perform the determining to determine whether the related software application is already started. If not, in S1 19, the security processor 31 needs to start the mobile payment software application, that is, read related software data from an external memory, for example, the security memory 45 or the secure storage area of the system memory 22, and load the related software data to the random access memory 32, so as to perform processing or an operation related to the software application. If the mobile payment software application is already started, in S120, the security processor 31 performs a normal payment transaction operation, including, for example, further exchanging information related to the mobile payment with the NFC processor 41, and performs a related software operation by using the storage space provided by the random access memory 32, to obtain an operation result about the mobile payment. The operation result includes transaction-related intermediate data or a transaction result, for example, a transaction amount or a transaction time. In S120, the transaction related amount or biometric recognition data may need to be input by a user. The biometric recognition data is acquired by a biometric recognition sensor in a mobile terminal 20, and is transmitted to the security processor system 23 through a biometric recognition input interface, to facilitate user authentication or user authentication on a cloud side. For example, user authentication based on fingerprint recognition may be implemented by using an interface similar to a fingerprint input interface in FIG. 3, and details are not described in this embodiment. In S121, the security processor 31 stores the transaction result in an external memory, for example, the security memory 45 or the secure storage area described above, to facilitate transaction information recording.

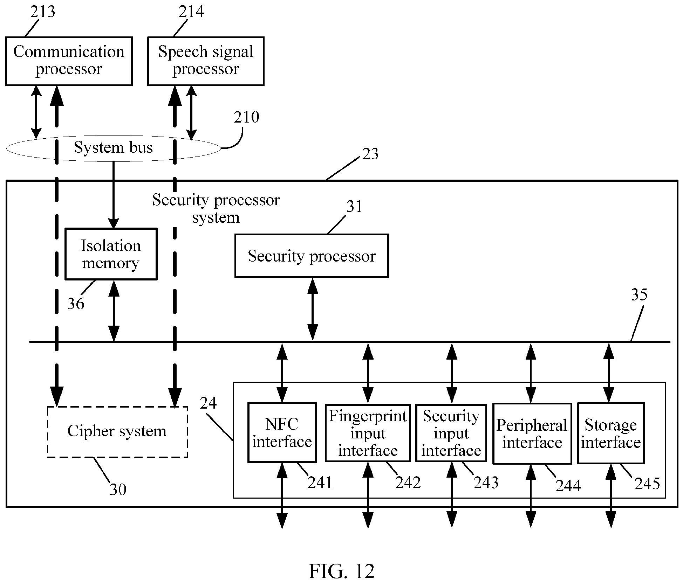

FIG. 12 is a schematic diagram of an application scenario in which a speech signal is encrypted by using the security processor system 23. A communication processor 213 may send first communication data to a wireless access point or receive second communication data from the wireless access point. A speech signal processor 214 may process a speech signal from a user to generate the first communication data sent by the communication processor 213, or is configured to process the second communication data received by the communication processor 213 to obtain a speech signal needed by the user. A signal transmission direction is shown by dashed lines in FIG. 12. When corresponding speech communication is performed, an encryption and decryption device 301 in the cipher system 30 is further configured to perform encryption processing on the first communication data or perform decryption processing on the second communication data. Therefore, in addition to a security operation related to the mobile payment, the encryption and decryption device 301 may be further configured to perform speech signal-based encryption and decryption processing on communication data, thereby implementing diversified security processing capabilities.

In the foregoing implementations, the communication processor 213 may include a baseband communication processor and an RF processor. In a communication mode, the communication processor 213 may include a cellular communication processor or a short-range communication processor. That is, there may be multiple communication transmission manners or supported communications protocols. The wireless access point may be a WiFi access point, for example, a WiFi router. In this case, the communication processor 213 is a WiFi communication processor. Alternatively, the wireless access point may be a base station, for example, a cellular communication access point supporting GSM, UMTS, WiMAX, TDS-CDMA, CDMA2000, LTE, or 5G. In this case, the communication processor 213 is a cellular communication processor communicating with the access point. The cellular communication access point may be, for example, an LTE base station, for example, an eNodeB. Therefore, the speech signal may be a PS domain speech signal, for example, a VoLTE speech signal. Alternatively, the speech signal may be a CS domain speech signal, for example, a GSM, WCDMA, or CDMA2000 speech signal. In this application scenario, the user may input a voice signal by using an input device, for example, a microphone, and transmit the voice signal to the speech signal processor 214 through a system peripheral interface 215 and the system bus 210. The voice signal is processed by the speech signal processor 214, is transmitted to the cipher system 30 through the system bus 210, an isolation memory 36 (or a bus bridge), and the security bus 35, and is encrypted by the encryption and decryption device 301 in the cipher system 30. Encrypted data is transmitted to the communication processor 213 through the security bus 35, the isolation memory 36 (or the bus bridge), and the system bus 210, so that the communication processor 213 transmits the encrypted data to the wireless access point, to improve the security. Reversely, when receiving an encrypted speech signal sent by the wireless access point, the communication processor 213 may transmit the encrypted speech signal to the encryption and decryption device 301 through a similar signal transmission path. The encryption and decryption device 301 decrypts the encrypted speech signal to obtain speech information, and transmits the speech information to the speech signal processor 214. The speech signal processor 214 processes the signal to obtain the voice signal. The voice signal in this embodiment is an analog speech signal, and may be played to the user by using a loudspeaker, to implement a secure user call function. Alternatively, a decryption function of the encryption and decryption device 301 may be implemented by the security processor 31.

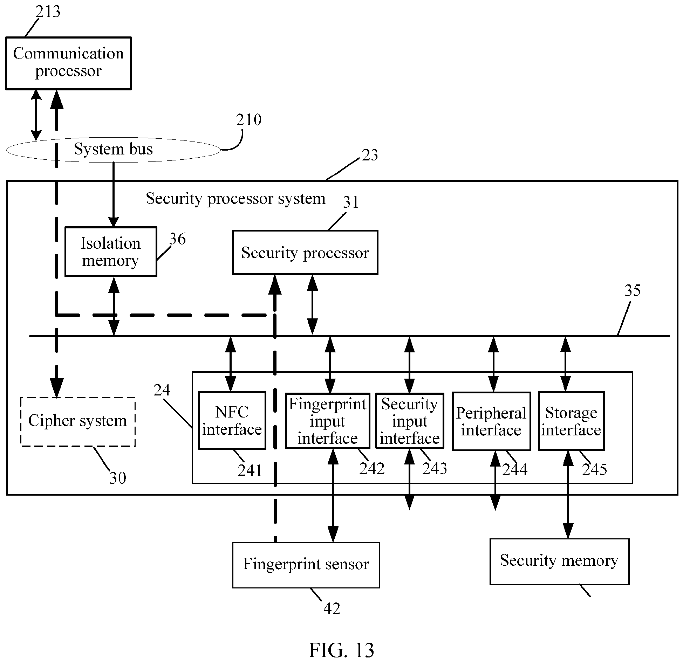

In an implementation, FIG. 13 is a schematic diagram of an application scenario in which user authentication based on fingerprint data is performed by using a cloud server. A specific signal transmission direction is shown by dashed lines in FIG. 13. The encryption and decryption device 301 is further configured to perform encryption processing on fingerprint data acquired by the fingerprint sensor 42, to obtain encrypted fingerprint data. The communication processor 213 sends, through the wireless access point, the encrypted fingerprint data to a server configured to perform the user authentication. The server performs the user authentication on the fingerprint data, and returns an authentication result to the communication processor 213 through the wireless access point. The authentication result is provided to the security processor 31, so that after learning that the user authentication based on the fingerprint data succeeds, the security processor 31 continues to perform a corresponding security operation, for example, continues a mobile payment operation. The authentication manner is authentication on a cloud side, and reduces overheads for processing the authentication by the mobile terminal 20. Specifically, regardless of whether the user authentication is performed by the security processor 31 or another component in the security processor system 23, or the user authentication is performed by the cloud server, the security processor system 23 needs to compare the fingerprint data acquired by the fingerprint sensor 42 with pre-stored fingerprint data, to verify whether the authentication succeeds.

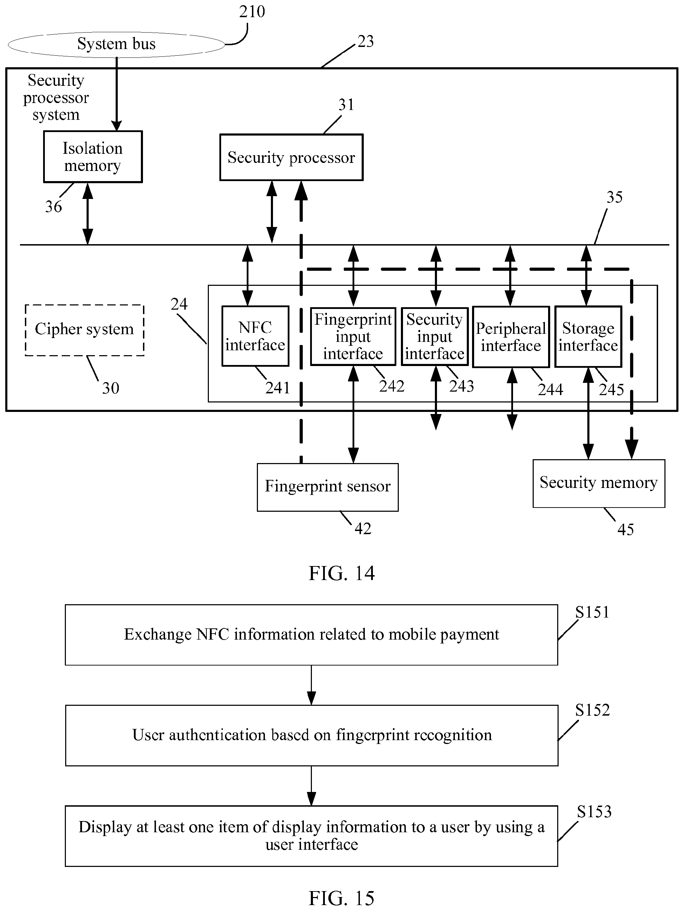

After acquiring the fingerprint data, the fingerprint sensor 42 may trigger the security processor 31 to perform a corresponding authentication operation. The security processor 31 may be triggered to obtain the pre-stored fingerprint data from an external memory, for example, like in FIG. 14, read related fingerprint data from the security memory 45 by using the storage interface 245, or read the fingerprint data by using the secure storage area of the system memory 22. The pre-stored fingerprint data may be fingerprint data of the user that is previously acquired by the fingerprint sensor 42, and is stored in the external memory for subsequent comparison. Preferably, using the dedicated security memory 45 to store the fingerprint data is a preferable choice. Specifically, according to a signal transmission path shown in FIG. 14, when acquiring the fingerprint data of the user for the first time, the security processor 31 may store the fingerprint data obtained from the fingerprint sensor 42 in the security memory 45 for the subsequent fingerprint data comparison, so as to prevent confidential fingerprint data from being transmitted on the low-security system bus 210, and reduce a possibility of data leakage.

As shown in FIG. 15, a processing method in a mobile payment process is further provided. The method is performed by the above-mentioned security processor system 23 in the system on chip 21. Biometric authentication is described by using fingerprint recognition as an example. In S151, the security processor system 23 exchanges NFC information related to the mobile payment with an NFC peer (for example, a communication device such as a POS machine) by using the NFC interface 241. The NFC information may include a mobile payment instruction, for example, a request message for the security processor system 23 to request the NFC peer to perform mobile payment, or a connection establishment message. The security processor system 23 may further receive, from the NFC peer, a message agreeing to establish a connection or a response message for the request message. Alternatively, the NFC information may further include mobile payment data, for example, transaction amount or transaction time information that is sent by the NFC peer. Alternatively, the NFC information may further include NFC authentication information, for example, exchange information for performing two-way authentication between the security processor system 23 and the NFC peer to verify whether the opposite party is authorized. The NFC information is information exchanged between the security processor system 23 and the NFC peer for completing the mobile payment. In S152, the security processor system 23 receives fingerprint data from the fingerprint sensor 42. The fingerprint data is used for user authentication based on fingerprint recognition in the mobile payment. As described above, the user authentication is used to verify whether a user using the mobile terminal 20 is an authorized user. The authentication may be performed by the security processor system 23, or may be performed by a cloud server. It can be understood that as described in the foregoing embodiment, the fingerprint recognition may be replaced with another biometric authentication manner, for example, iris recognition, voiceprint recognition, human face recognition, or smell recognition. A special human body characteristic of the user, for example, a fingerprint, or smell, may differentiate the user from other users. Therefore, the user authentication is implemented by comparing data related to the characteristic with pre-stored data. In S153, the security processor system 23 displays at least one item of display information to the user by using a user interface (UI). Optionally, the display information includes at least one of a user information input interface, a transaction interface of the mobile payment, or a transaction success interface. The user interface is configured to present, to the user, display information related to the mobile payment, including a transaction amount, a transaction time, or the like, or may selectively implement some user input. The user interface may be formed on a hardware device such as a touchscreen or a display screen. Specifically, the touchscreen or the display screen may be directly coupled to the security processor system 23 through a security input interface 243. Alternatively, the touchscreen or the display screen may be coupled to the system bus 210 through the system peripheral interface 215. In this case, the security processor system 23 needs to transmit the to-be-displayed display information to the system peripheral interface 215 through the security bus 35, the isolation memory 36 (or the bus bridge), and the system bus 210, and transmit, through the system peripheral interface 215, the to-be-displayed display information to the touchscreen or the display screen for displaying, so that the user watches the display information on the user interface formed by the touchscreen or the display screen. Optionally, the user interface is formed as driven by UI software that is executed by the at least one central processing unit 211 and that is based on the general-purpose operating system software, or is formed as driven by secure UI software in the at least one security software application executed by the security processor 31. It can be understood that steps S15, S152, and S153 in the method are not strictly performed in order.

It can be understood that all or some steps of the method or procedure that is performed by software and that is used in each embodiment of the present invention may also be implemented in a form of a software functional unit and sold or used as an independent product. The related software functional unit may be a computer program product, or may be stored in a computer readable storage medium. The computer program product may include all or some of the general-purpose operating system software, the common software application based on the general-purpose operating system software, the security operating system software, and the at least one security software application based on the security operating system software that are mentioned in the previous embodiments. Based on the understanding, at least one part of a technical solution corresponding to the method may be embodied in a form of computer code. The computer code may be stored in a storage medium, and includes several instructions used to enable a computer device (which may be the mobile terminal mentioned above, or a personal computer) to perform all or some steps of the corresponding method. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

It can be understood that a typical application scenario of the mobile terminal 20 mentioned in the embodiments of the present invention may be a mobile phone, for example, various smartphones. Each component in the system on chip 21, for example, the at least one processor or the security processor system 23, may include multiple transistors or logic gate circuits, and may operate under driven by necessary software. Alternatively, some devices, for example, which may be a pure hardware accelerator, may selectively operate without software.

It should be noted that the mobile payment in the embodiments of the present invention is a generalized definition, and includes both a commercial or financial mobile payment service and a payment service of another type, for example, public transport, an identity card, or a social security card. That is, by means of mobile payment, a mobile terminal may be connected to a communication peer, to finally exchange payment information with a server, and to implement a data transaction, data redemption, or data settlement associated with one or more accounts in the mobile terminal. In addition to currency, a unit of a data transaction, redemption, or data settlement may also be another unit that can be used to implement payment, redemption, or transaction settlement, for example, virtual currency, various types of bonus points or a line of credit. This is not limited in this embodiment. The account includes but is not limited to a personal account, a group account, or an organization account. Compared with a payment behavior implemented only on a fixed terminal, implementation of the mobile payment is more flexible. The mobile payment is executed by the mobile terminal 20 shown in FIG. 2, and may better satisfy a requirement for performing payment anytime and anywhere.

It should be noted that the system on chip 21 mentioned in the embodiments of the present invention is applied to a mobile terminal 20, but actually, may also be applied to another processing device not having a mobile communication function, for example, a handheld device not having a mobile communication capability. Therefore, functions of some devices or units in the system on chip 21 mentioned in the embodiments of the present invention are not necessary. For example, the at least one processor may be omitted. For example, one or more of the graphics processing unit 212, the communication processor 213, the speech signal processor 214, the system peripheral 215, the image signal processor 217, or the like may be selectively omitted. The central processing unit 211 or the system power management unit 216 may also be omitted and replaced with a control circuit having simpler functions and design. Therefore, a form of a related processing device including the system on chip 21 is not limited.

The foregoing are merely example embodiments of the present invention. A person skilled in the art may make various modifications and variations to the present invention without departing from the spirit and scope of the present invention. For example, specific shapes or structures of components in the accompanying drawings in the embodiments of the present invention may be adjusted according to an actual application scenario.

## Claims

1. A system on chip SoC, wherein the SoC is integrated on a first semiconductor chip, and comprises: a system bus, at least one processor coupled to the system bus, and a security processor system coupled to the system bus, wherein security isolation exists between the security processor system and the at least one processor;
the at least one processor comprises at least one central processing unit, wherein the at least one central processing unit is configured to: execute general-purpose operating system software, and communicate with the security processor system through the system bus under the action of the general-purpose operating system software; and
the security processor system comprises a security processor, a first memory, multiple interfaces, and a security bus, wherein the security processor, the first memory, and the multiple interfaces are coupled to the security bus, and the security bus is coupled to the system bus, wherein
the security processor is configured to execute security operating system software and at least one security software application based on the security operating system software, wherein the at least one security software application comprises mobile payment software used to implement mobile payment;
the first memory is configured to provide storage space used by the security processor to execute the security operating system software and the at least one security software application; and
the multiple interfaces comprise a near field communication NFC interface and a biometric recognition input interface, wherein
the NFC interface is configured to exchange NFC information related to the mobile payment with an NFC peer through an NFC processor; and
the biometric recognition input interface is configured to receive biometric recognition data from a biometric recognition sensor, wherein the biometric recognition data is used for user authentication based on biometric recognition in the mobile payment.

2. The SoC according to claim 1, wherein the multiple interfaces further comprise a security input interface, configured to receive user information that is input by a user and that is related to the mobile payment.

3. The SoC according to claim 1 or 2, wherein the multiple interfaces further comprise a peripheral interface, configured to indicate, by using a peripheral device, to the user that the mobile payment is performed.

4. The SoC according to any one of claims 1 to 3, wherein the security processor system further comprises a nonvolatile second memory that is coupled to the security bus and that is configured to store the security operating system software and the at least one security software application; and
the security processor is configured to: read the security operating system software and the at least one security software application from the second memory, and load the security operating system software and the at least one security software application to the first memory to execute the security operating system software and the at least one security software application.

5. The SoC according to any one of claims 1 to 4, wherein the security processor system further comprises a security isolation device that is coupled to the security bus and that is configured to implement the security isolation, and the at least one processor communicates with the security processor system through the system bus and the security isolation device.

6. The SoC according to claim 5, wherein the security isolation device comprises at least one of an isolation memory or a bus bridge; and the isolation memory or the bus bridge is configured to exchange data or instruction between the at least one processor and the security processor system.

7. The SoC according to any one of claims 1 to 6, wherein the security processor system further comprises a secure boot memory that is coupled to the security bus and that is configured to store a boot program instruction for initialization of the security processor; and
before executing the security operating system software and the at least one security software application, the security processor obtains the boot program instruction from the secure boot memory to initialize the security processor.

8. The SoC according to claim 7, wherein the boot program instruction is an encrypted boot program instruction; and
when the security processor obtains the boot program instruction from the secure boot memory, the boot program instruction is decrypted by a decryption logic circuit to obtain a decrypted boot program instruction, wherein the decrypted boot program instruction is used to initialize the security processor.

9. The SoC according to any one of claims 1 to 8, wherein the security processor system further comprises a one-time programmable memory that is coupled to the security bus and that is configured to store a security parameter of the security processor system, wherein the security parameter comprises at least one of a root key, a calibration parameter, a configuration parameter, or an enable parameter.

10. The SoC according to claim 9, wherein the one-time programmable memory is further configured to store a patch program instruction of the boot program instruction for the initialization of the security processor.

11. The SoC according to any one of claims 1 to 10, wherein the security processor system further comprises an anti-attack sensor, configured to: detect an exception of an operating parameter of the security processor system, and trigger at least one of the following operations when the exception occurs: the security processor system performs an alarm, the security processor resets, or the first memory or at least one register in the security processor system is reset or emptied, wherein
the operating parameter comprises at least one of a voltage, a current, a clock frequency, a temperature, or a laser intensity.

12. The SoC according to any one of claims 1 to 11, wherein the security processor system further comprises an anti-attack metal layer, wherein the anti-attack metal layer is located at one or more topmost layers of the first semiconductor chip, and covers at least one part of the security processor system in a layout; and
the anti-attack metal layer is configured to: detect an external physical detection or attack, and generate an electrical signal when the physical detection or attack is detected, wherein the electrical signal is used to trigger at least one of the following operations: the security processor system performs an alarm, the security processor resets, or the first memory or the at least one register in the security processor system is reset or emptied.

13. The SoC according to any one of claims 1 to 12, wherein the security bus comprises at least one of an advanced high-performance bus AHB or an advanced peripheral bus APB.

14. The SoC according to any one of claims 1 to 13, wherein the security processor system further comprises a direct memory access DMA controller that is coupled to the security bus and that is configured to: read data from the first memory and output the data to the security bus, or write data to the first memory by using the security bus.

15. The SoC according to any one of claims 1 to 14, wherein the security processor system further comprises a cipher system coupled to the security bus, wherein the cipher system comprises at least one of the following:
an encryption and decryption device, configured to perform encryption and decryption processing on at least one type of data in the security processor system;
an authentication device, configured to authenticate at least one type of data in the security processor system;
a random number generator, configured to generate a random number, wherein the random number is used as a seed for generating a key or a unique chip identifier; or
a key manager, configured to generate, distribute, or destruct, in the security processor system, a key for performing the encryption and decryption processing or the authentication.

16. The SoC according to claim 15, wherein the at least one processor further comprises:
a communication processor, configured to: send first communication data to a wireless access point or receive second communication data from the wireless access point; and
a speech signal processor, configured to: process a speech signal from the user to generate the first communication data sent by the communication processor, or process the second communication data received by the communication processor to obtain a speech signal needed by the user, wherein
the encryption and decryption device is further configured to perform encryption processing on the first communication data or perform decryption processing on the second communication data.

17. The SoC according to claim 15, wherein the at least one processor further comprises: a communication processor, wherein
the encryption and decryption device is further configured to perform encryption processing on the biometric recognition data to obtain encrypted biometric recognition data; and
the communication processor is configured to send, through a wireless access point, the encrypted biometric recognition data to a server configured to perform the user authentication.

18. The SoC according to claim 16 or 17, wherein the communication processor comprises at least one of a cellular communication processor or a short-range communication processor.

19. The SoC according to any one of claims 1 to 18, wherein the security processor is further configured to perform the user authentication by using the biometric recognition data.

20. The SoC according to any one of claims 1 to 19, wherein the security processor system further comprises: a biometric recognition authenticator, configured to perform the user authentication by using the biometric recognition data.

21. The SoC according to any one of claims 1 to 20, wherein under the security isolation, the at least one processor is unable to directly access the first memory or the at least one register in the security processor system.

22. The SoC according to any one of claims 1 to 21, wherein the biometric recognition comprises at least one of the following: fingerprint recognition, iris recognition, voiceprint recognition, human face recognition, or smell recognition.

23. The SoC according to any one of claims 1 to 22, wherein the multiple interfaces further comprise a storage interface, configured to be coupled to a third memory, wherein
the third memory is configured to store the security operating system software and the at least one security software application; and
the security processor is configured to: read the security operating system software and the at least one security software application from the third memory by using the storage interface, and load the security operating system software and the at least one security software application to the first memory to execute the security operating system software and the at least one security software application.

24. A processing device, comprising the SoC and the third memory according to claim 23, wherein the third memory is integrated on a second semiconductor chip.

25. A processing device, comprising the SoC according to any one of claims 1 to 22 and a fourth memory integrated on a third semiconductor chip, wherein the SoC is coupled to the fourth memory through an inter-chip interface, and the fourth memory comprises a secure storage area and a common storage area that are mutually isolated;
the secure storage area is used to store the security operating system software and the at least one security software application;
the common storage area is used to store the general-purpose operating system software;
the at least one central processing unit is configured to: obtain the general-purpose operating system software from the common storage area by using the inter-chip interface, and execute the general-purpose operating system software; and
the security processor is configured to: obtain the security operating system software and the at least one security software application from the secure storage area by using the inter-chip interface, a system bus, and a security bus, and execute the security operating system software and the at least one security software application.
